# EUROPEAN PATENT SPECIFICATION

(11) **EP 1 202 471 B1**
(45) Date of publication and mention of the grant of the patent: **12.11.2003**
(21) Application number: 01117256.6
(22) Date of filing: 17.07.2001
(51) Int. Cl.: H04B 7/08

(54) **Optimization method of the combination of reception signals in radio receivers in space diversity on the basis of the frequency of FEC impulses generated by the demodulator**
Optimierungsverfahren zur Kombination von Empfangssignalen in Funkempfängern in Raumdiversität basierend auf der Frequenz der durch den Demodulator erzeugten FEC-Impulsen
Procédé pour l'optimisation de signaux combinés dans des récepteurs radio à diversité spaciale se basant sur la fréquence d'impulsions de correction d'erreur sans voie de retour (FEC) produit par le démodulateur

(30) Priority: 28.07.2000 IT MI001747
(43) Date of publication of application: 02.05.2002
(73) Proprietor: Siemens Mobile Communications S.p.A., 20126 Milano (IT)
(72) Inventor: Dal Lago, Antonella, 20067 Paullo (MI) (IT); Dell'Orto, Andrea, 23875 Osnago (LC) (IT); Fumagalli, Sergio, 20052 Monza (MI) (IT); Sampietro, Luigi, 22063 Cantu (CO) (IT)
(74) Representative: Giustini, Delio

(56) References cited:
- GB-A- 2 050 118
- US-A- 4 160 952
- US-A- 5 668 839

## Description

### Field of the invention

The present invention relates to the field of space diversity radio receivers and more in particular to an optimization method of the combination of received signals in space diversity radio receivers on the basis of the frequency of FEC impulses (Forward Error Correction) generated by the demodulator.

The reception in space diversity is a well known technique through which it is possible to improve the quality of connections in radio link. The benefit, compared to the case of a single receiver, is mainly expressed as decrease of the outage time (outage), as well as of the duration and number of unavailability and error events known with the following acronyms: Ol (Outage Intensity); UNAV (UNAVailable Seconds); ES (Errored Seconds); SES (Severely Errored Seconds); CSES (Consecutive SES).

In the past years, with the advancement of combiner technologies in space diversity radio receivers, international regulations have defined more and more severe quality targets. At present, the media independent ITU-T Rec. G.826 is in force, and it requires a limit of 10 SES to be guaranteed in the worst month on a trunk length I = 50 Km, typical for high capacity digital radio links. Moreover, the provisional recommendation ITU-T G.828 (draft) reduces the target for errored seconds (ES) by a four factor versus the G.826. Also the CSES parameter (Consecutive SES) should assume in the near future some importance, being useful to discriminate the different effect that consecutive SES can cause on a data traffic, compared to an equal number of temporarily disjoined SES.

### Background art

Against a request of an ever-increasing quality in the reception-transmission of digital signals, also radio equipment shall tend to the best possible performances. In the sector of the technique under which the subject invention falls, the Applicant is the owner of the European patent EP 664.939 that describes a combiner of signals for space diversity radio receivers. The combiner operates at intermediate frequency and includes: devices for the measurement of the voltage levels of signals at intermediate frequency on each branch of the combiner; an AGC (Automatic Gain Control) for the measurement of a voltage Vagc indicating the power attenuation suffered by the combined signal due to flat fading; and also a filtering network measuring a voltage Vdisp indicating the dispersion of the amplitudes of the above-mentioned combined signal in the frequency spectrum of the modulated signal, detecting at the same time the relative position Fn of the notch caused by the selective fading. The filtering network is the object of a second Italian patent IT 1255856 in the name of the same Applicant. The combiner operation is governed by an algorithm called WESt (Weighted Evaluation Strategy) which minimizes the BER (Bit Error Ratio) by minimizing a polynomial target function C=C(Vagc, Vdisp) that approximates a family of logarithmic curves of the BER which are functions of flat fading and of spectrum distortion too; each curve is identified by a corresponding value of a parameter representing a particular constant BER value. The representation of a family of curves through a target function is enabled by an opportune normalisation of the amplitude dispersion in relation to the relative position of the notch frequency, which compresses the curve family within the narrow limits of a band in the Cartesian plane in which the values of the normalised target function fall. At each iteration of the calculation, the control algorithm described in the flow-chart showing the WESt strategy generates regulation signals of the gain of two front-end radio frequency amplifiers, placed on the Main and Diversity, respectively, and of the control of a phase shifter placed on one of the two branches of the combiner. Through the WESt strategy, the control logic can drive the phase and the relative combination amplitude of the two signals received, both in presence of flat fading, and of dispersion fading, to effectively contrast the negative effects on the BER due to atmospheric phenomena causing the mentioned fading.

### Objects of the invention

From the date of licensing (dating back to 1992) on, WESt combiners have been installed in many plants spread over different geographical areas and have always assured the compliance with the standards in force. Nowadays, in view of the more severe quality requirements imposed by the ITU-T G.828 standard and of the future trends concerning the increased severity of these standards, and also in the assumption that the new CSES (Consecutive SES) parameter has to be considered, a refinement of the WESt combination strategy becomes necessary to contrast the negative effects, in particularly critical fading conditions, that is, when the combiner is requested to give a considerable accuracy in determining the best phase interval of the shifting angle. The highlighted requirement is not a prerogative of the sole WESt combiner, but of other combination strategies.. Some critical cases of propagation are described below, in which the need for such a refinement is recognized:
- selective fading in band, both on the Main signal, and on the Diversity signal, with a small difference between the frequencies of the notches on the two paths (Δf_{Notch}< 5MHz);
- field levels of the signals received by the Main receiver and by the Diversity receiver next to the thermal noise threshold, associated to selective phenomena present on both the antennas;
- reception of interferent signals of the co-channel type (co-channel) with high degradation of the signal/interferent ratio (C/I).

Therefore, scope of the present invention is to overcome the limits encountered by the present combiners in presence of particularly critical fading conditions, and to indicate an optimization method of the combination of received signals in space diversity radio receivers which makes the combiners that adopt it immune from the underlined limitations.

### Summary of the invention

To attain these objects, scope of the present invention is a combination method of received signals in space diversity radio receivers, as described in claim 1.

From the provisions of the claims, it can be noticed that the method of the present invention is more structured compared to the methods used in the known combiners, since in addition to the variables usually acquired (such as for instance in the WESt combiner they are the power level and the relative distortion of the spectrum at intermediate frequency of the combined signal, and the power levels of the signals at intermediate frequency on each branch) the FEC (Forward Error Correction) correction impulses coming from the demodulator are acquired and processed.

As it is already known, the FEC signal is made of single impulses emitted by the demodulator at any correction of an error detected in the received symbols. It must be pointed out that the generation of an impulse does not mean that a received symbol in a wrong way also generates wrong data, but simply, that an error has been detected in the demodulated symbols and that the error has been corrected thanks to the redundancy of the error correction codes used in the data coding. In demodulators belonging to the receivers used in high capacity digital radio links, of the 64 or 128 QAM type (or employing constellations having a higher number of points), the f_{FEC} frequency of FEC impulses represents a very significant information on the quality of the received signal; there is in fact a monotone relation between the frequency f_{FEC} and the bit error ratio (BER) that continuously extends for several decades of BER variation. The explanation of such a monotone law is that the rate of non-corrected symbols results proportional to the rate of corrected symbols, and therefore to the frequency f_{FEC}. In fact, we cannot reasonably think that all the wrong symbols can be recognised as such by the correction algorithm, and corrected not to influence the BER.

The starting point of the solution to the technical problem highlighted above, as it results from the text of the description of the present invention and from all the claims, is the continuous processing of FEC impulses made in parallel to the usual combination strategy during acquisition time slots having pre-set duration. With synchronized demodulator the processing enables to obtain a frequency f_{FEC} variable in time according to the propagation conditions,. The frequency f_{FEC} is then compared with a BERth threshold above which the BER is considered critical and barely remediable with the usual combination strategy. The overcoming of the critical threshold by the f_{FEC} frequency value causes the switching toa new combination strategy having the purpose to minimize the frequency f_{FEC} to bring it again under said critical threshold, in order to be able to return to the original valid combination strategy under the threshold. Therefore, we can notice that the frequency f_{FEC} of FEC impulses plays the role of a new target function valid above the critical threshold BERth of the error ratio on the demodulated signal. The critical threshold BERth defines a criterion for the switching between the two combination strategies. The generality of the implementation examples of demodulators comprising circuits for the discrimination of voltage rates crossing a threshold, shows the necessity to introduce an hysteresis area around the threshold to avoid excessive rebounds and consequent operation instability.

In the method according to the invention, FEC impulses are counted after any movement of the phase shifter, within an acquisition time interval coinciding with the waiting time for the exhaustion of the transients on Vagc and Vdisp voltage. The transients are caused by the time constants of the different devices placed in the signal paths, among which the more significant constant can be attributed to the AGC amplifier acting on the combined signal. The counting method mentioned above enables to interleave in a transparent way the steps relevant to the count of FEC impulses within the sequence of steps of the WESt combination method, giving the method so modified the additional faculty to check the frequency of FEC impulses after each phase shifting step, without suffering a slowing down in the execution due to the above.

A similar counting mode would result applicable also in the common combination methods of the known art, different from the WESt strategy, maybe paying an imperceptible slowing down if they do not foresee the use of an AGC. However, it must be pointed out that the speed of any combiner, with or without AGC, is nevertheless influenced by the time constants of the filters at intermediate frequency and of acquisition circuits of the different monitored voltages that must also be filtered to be reliable. Consequently, the idea implemented in the subject invention to avail of setting transients of the combiner to measure the f_{FEC} frequency assumes general validity, also because some transients inevitably occur after each variation of a controlled variable.

Another technical characteristic of the method of the present invention is to be able to avail of the knowledge of the f_{FEC} frequency of FEC impulses, obtained in parallel to the usual combination method, to make a prediction algorithm of a preferential phase shifting direction to be used as phase shifting direction in case of synchronization loss of the demodulator. This situation is highlighted by a f_{FEC} frequency maintaining constant at a full-scale value. The prediction algorithm of the preferential phase shifting direction is developed in parallel to the usual combination method too. The steps of the prediction algorithm, as in fact we could see describing the flow chart of the method according to the invention, are interleaved among those of the usual method without sensibly slowing down the execution.

A further technical characteristic of the method of the present invention is to avail of the results of the previous prediction algorithm in an algorithm for the selection of the absolute value of the first phase shifting that must be made on the moment of the switching of the usual combination strategy to that for the control of FEC impulses. Also the selection algorithm is developed in parallel to the usual combination method, without notably slowing down the execution.

Further scope of the present invention is a combiner of space diversity received signals , including means suitable to the operation according to the method of the invention, as described in the combiner relevant claims.

The circuit architecture of a combiner capable of implementing the method of the invention is strongly based on a double loop feedback diagram reporting significant status information to the control logic. The inner loop is the one usually bringing to the above-mentioned logic the effects on the combined IF signal induced by variations impressed to the controlled variables, while the outer loop has been added to bring to the control logic the effects induced on the frequency of FEC impulses following the above-mentioned variations in the controlled variables.

### Advantages of the invention

The double loop diagram of the combiner of the present invention makes the combination strategy more effective, in comparison with pure WESt or similar combination strategies of the known art. The higher effectiveness derives from the fact that the combiner avails of the additional information on FEC impulses to delineate with the utmost accuracy the best interval of the phase angle in critical operation conditions, where the previous combination strategies result being lacking. The above-mentioned additional information is continuously supplied by the demodulator, irrespective of its possible use in a combiner and has the advantage to give a considerable added value, resulting from a complex mathematical processing of transmitted and received signals.

The new combiner has been first studied through computer simulation, afterwards, a prototype has been tested on an experimental trunk, and in both cases the improvement detected in the critical operation cases mentioned in the formulation of the technical problem proved to be significant; in particular, a significant reduction of the signature areas was detected, whose extension indicated a poor quality of the demodulated signal.

As already pointed out, a further advantage of the new combination method is to enable the check of the frequency of FEC impulses after each phase shifting step, without suffering any slow-down in the execution. Thanks to the monotone relation between the f_{FEC} frequency and the BER, the above-mentioned check gives at any moment an indirect knowledge on the quality of the combined signal.

Concerning the hardware implementation of a combiner according to the teachings of the proposed method, but for the fact to provide an interface between the output of FEC impulses from the demodulator and the combiner control logic, however easy to implement, the circuits of the combiner would remain essentially unchanged, since the major complication is confined within the firmware of the microprocessor forming the control logic.

### Brief description of figures

The invention, together with further objects and advantages thereof, may be understood from the following detailed description of an embodiment of the same, taken in conjunction with the accompanying drawings, in which:
- Figure 1 shows a block diagram of a space diversity receiver including the signal combiner of the present invention;
- Figure2 shows a flow chart showing the operation of a combiner of the known art corresponding to the blocks of Figure 1 inside the dotted line contour;
- Figures 3, 4 and 5 show a flow chart of a processor program governing the operation of the signal combiner globally indicated in Figure 1 according to the combination method of the present invention;
- Figure 6 indicates a time chart, representing a succession of phase shifting introduced by a SFAS block of Figure 1, forming the basic information for a prediction algorithm of the best phase shifting direction with demodulator out of synchronization; and
- Figure 7 shows a flow chart of the above-mentioned prediction algorithm, corresponding to the detail of a step F10 of the flow chart of Figure 3.

### Detailed description of a preferred embodiment of the invention

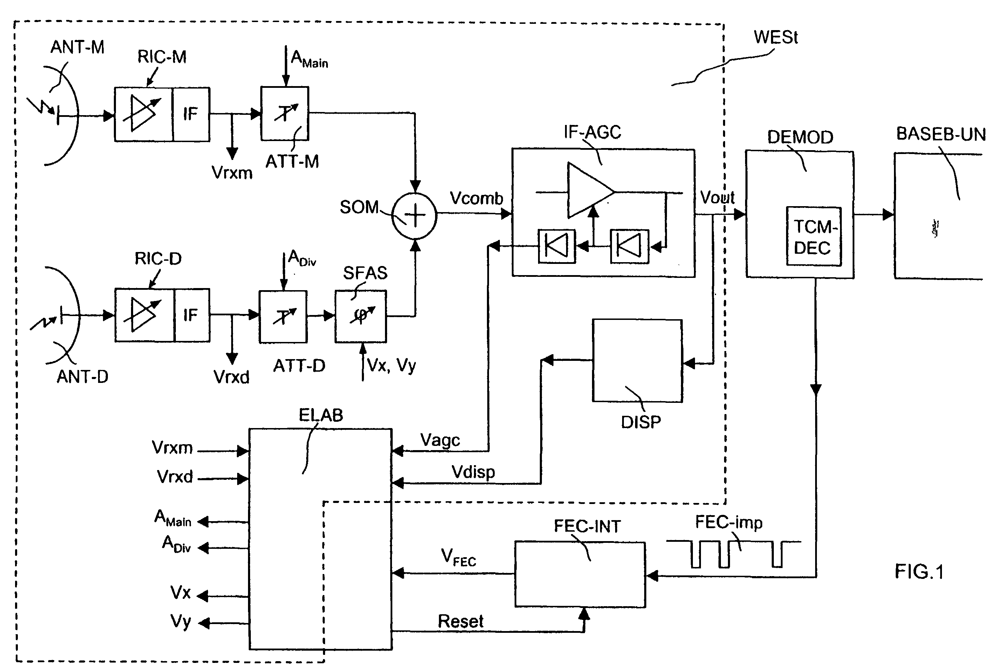

With reference to Figure 1 we can notice the circuit diagram of a space diversity receiver including a WESt block, indicated with a dotted line, a DEMOD block, and a FEC-INT block. The WESt block represents the space diversity receiver described in the first one of the mentioned patents in the name of the same Applicant. The DEMOD block represents a demodulator for QAM (Quadrature Amplitude Modulation) modulated signals connected between the output of the WESt receiver and the input of a block BASEB-UN, that in turn represents a generic unit operating in base band on the demodulated signal. The block FEC-INT represents an interface between a TCM-DEC block included in the demodulator DEMOD and a processing block ELAB, only partially included in the WESt block.

The WESt block includes two low noise front-end receivers, denoted RIC-M and RIC-D, respectively connected to two antennas ANT-M and ANT-D. Here after, the suffix M indicates the Main branch with the relevant blocks and signals, and the suffix D the Diversity branch; from an implementation point of view nothing changes if the two suffixes were exchanged. Radio frequency receivers RIC-M and RIC-D include a respective conversion stage at intermediate frequency IF. The remaining circuit blocks included in the WESt dotted line block all belong to the signal combiner that operates on the basis of the WESt strategy of the quotation. Among these, we can distinguish:
- two electronically controlled variable attenuators ATT-M and ATT-D, placed at the output of the IF stages of the receivers RIC-M and RIC-D. Here a little difference is detected compared to the invention described in the first mentioned patent, where the IF signal attenuation were not present and the adjustment of amplitudes was made, in an equivalent but more difficult manner, controlling the gain of RIC-M and RIC-D front-end amplifiers;
- an electronically controlled variable phase shifter SFAS, placed on the Diversity branch (but that could be moved on the Main branch and nothing would change to the purposes of the subject method);
- an adder SOM of the signals coming from the Main and Diversity branches of the combiner, at whose output a Vcomb combined signal is present;
- an amplifier working in AGC (Automatic Gain Control) mode whose input is fed by the Vcomb signal, and at whose main output there is a combined signal Vout corresponding to the Vcomb signal brought to a constant power level before being sent to the demodulator DEMOD; and at a secondary output of which a Vagc signal is present indicating the amount of the amplification made to compensate the flat fading (flat fading) in the band of the modulated signal;
- a filtering network DISP receiving the Vout signal and measuring the amount of power spectral dispersion in the band of the modulated signal, caused by the selective fading due to multiple paths (multipath fading). The DISP network, corresponding to the invention described in the second mentioned patent in the name of the same Applicant, generates at output a Vdisp voltage furnishing an information on the above-mentioned dispersion and on the approximate position of the notch frequency.

The operation of the WESt diversity receiver is governed by a microprocessor ELAB. This block is indicated as belonging only in part to the WESt block, because it performs the complete optimization method of the combination of received signals, scope of the present invention. The new method comprises the operation of the signal combiner included in the WESt block, replacing the relevant combination strategy when the conditions so require. Moreover, also when the conditions do not require it, the firmware of the microprocessor ELAB governing the operation of the WESt block does not truly correspond to the flow-chart described in the first quotation. In fact, concerning what already said about prediction and selection algorithms, of the phase shifting direction and absolute value, respectively, the program developed by the ELAB block includes calculation steps interleaved with typically WESt ones, but the results of which the sole FEC impulse control strategy will avail of. From the above, it results that it is no more possible to continue the description considering the WESt block as having its own autonomy respect to the complete architecture visible in Figure 1.

This said, the FEC-INT interface receives a FEC-imp signal coming from the TCM-DEC block included in the block of the demodulator DEMOD, it receives also a Reset signal coming from the ELAB block, and generates a voltage corresponding to a signal V_{FEC} that sends to the ELAB block in digitized form. The TCM-DEC block is a decoder of the code associated to the symbols transmitted, capable of performing the detection of errors on demodulated symbols and, where possible, the correction of the same. In the case described in a not-confining manner, the TCM-DEC block operates on a signal transmitted using a TCM modulation (Trellis-Code Modulation), that is, in which the modulation in quadrature and coding jointly occur. The TCM-DEC block generates an impulse of the FEC-imp signal at each error detected and corrected.

The interface FEC-INT, whose internal structure is not shown in Figure 1 for convenience, includes a logic port crossed by the FEC-imp signal for the whole duration of f_{FEC} frequency measurement. The interface FEC-INT includes also circuits, analog or digital, placed downstream the above-mentioned measuring port for the generation of the V_{FEC} signal indicating the f_{FEC} frequency. Irrespective of the particular analog or digital implementation of the above-mentioned circuits, the measurement of the f_{FEC} frequency is started from the microprocessor ELAB that generates the Reset command to the interface FEC-INT, and is terminated by a stop signal emitted by an internal timer counting a pre-set time. According to the present invention, the duration of the measurement window is matched with the transient duration on the output voltage Vagc of the IF-AGC amplifier in the response to a voltage step. The Reset signal opens the measurement logic port and starts the internal timer. When the count of the internal timer reaches the pre-set time, ELAB emits a signal disabling the logic port and measurement is stopped. The microprocessor ELAB generates the Reset signal after each command sent to the phase shifter SFAS, in order to assure the correct synchronization between the movement of the phase shifter and the opening of the logic port for the measurement of the f_{FEC} frequency. Should the circuits for the generation of the V_{FEC} signal be realized through an analog integrator, the frequency f_{FEC} would be proportional to the final value of the V_{FEC} voltage. In the case the above-mentioned circuits were implemented through a counter module, the f_{FEC} frequency would result proportional to the number of impulses counted in the pre-set time, and the V_{FEC} signal would correspond to a digital word. The digital implementation has to be preferred compared to the analog one since it avoids the A/D conversion of the V_{FEC} voltage.

The microprocessor ELAB receives at input the following signals, previously revealed and converted to digital when the case so requires:
- two signals Vrxm and Vrxd coming from the receivers RIC-M and RIC-D, indicating the field intensity present on the antenna ANT-M and ANT-D, respectively;
- the Vagc signal indicating the value of the flat fading;
- the Vdisp signal indicating the dispersion of the amplitudes and of the notch position due to the selective fading;
- the V_{FEC} digital signal indicating the frequency f_{FEC} of FEC impulses.

On the basis of signals received and of the specific operation program, the microprocessor ELAB gives at output the following signals for the combiner control:
- two signals A_{Main} and A_{Div} for the control of variable attenuators ATT-M and ATT-D that attenuate the intermediate frequency signals Vrxm and Vrxd;
- two signals in quadrature Vx and Vy for the control of the phase shifter SFAS;
- the Reset signal for the synchronization of the interface FEC-INT.

It must be pointed out how the multiple variables kept simultaneously controlled by the ELAB block enable to reach a considerable sophistication in the combination strategy.

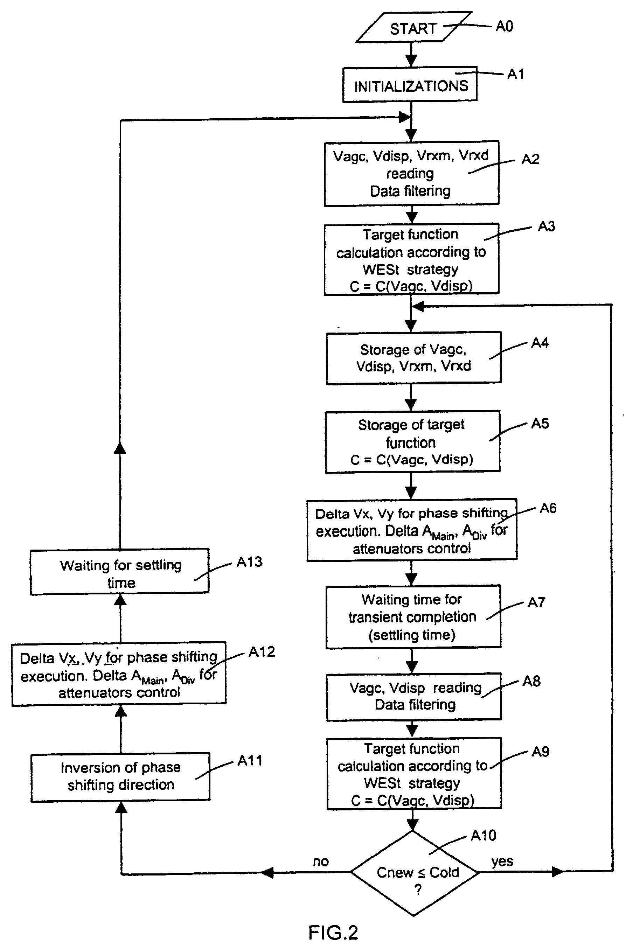

With reference to **figure 2** it is firstly newly proposed the flow chart of the program governing the operation of the WESt combiner described in the first patent already mentioned. This will simplify the comparison with the modified program to meet the requirements of the present invention when the operation of the combiner is dominated by the WESt strategy. The blocks in Figure 1,, representing the novelty introduced by the present invention, must be ignored for the comment of Figure 2 and the microprocessor ELAB must be considered to be controlled by the old WESt firmware.

The flow chart of **Figure 2** starts from a START command in step A0, followed by a step A1 in which the microprocessor ELAB sets some starting values of the variables controlled by blocks: ATT-M, ATT-D and SFAS; moreover, internal records and counters used by the microprocessor ELAB are also reset. In the next step A2 the Vrxm, Vrxd, Vagc, and Vdisp voltage values are read. Readings are repeated for a reasonable number of times and then averaged to increase the sureness of the values read, this operation corresponding to a filtering of reading data. In the next step A3 the target function C = C(Vagc, Vdisp), also called target function, as it was defined in the quotation, is calculated. In the next steps A4 and A5 the readings of step A2 and the value of the target function calculated in A3, respectively, are stored. In the next step A6 the microprocessor ELAB generates a small Delta variation in the couple of controlled variables Vx, Vy, for the execution of a signal phase shifting on a branch of the combiner, and an opportune Delta variation in the couple of controlled variables A_{Main}, A_{Div}, for the execution of a differential fading of signals on the two branches of the combiner; the two Delta complying with the WESt strategy tending to minimize the target function C = C(Vagc, Vdisp). The next step A7 corresponds to a waiting time for the completion of the transient (settling. time) on voltage Vagc at the output of block IF-AGC. A reading and filtering step A8 of the new values of Vagc and Vdisp voltage follows, and then a step A9 for the recalculation of the target function C = C(Vagc, Vdisp) with the new values of Vagc and Vdisp. In the next step A10 a test is made on the new value of the target function to check if the recalculated value is not higher than the previous value stored after the variations, made in A6, to the values of the controlled variables. If the response to test in A10 is affirmative, the program returns to the beginning of step A4 to store the new values of Vrxm, Vrxd, Vagc, Vdisp voltage and then go on with the execution up to step A10. Until the response in A10 is "yes", steps A4 ö A10 cyclically repeat, minimising the target function. On the contrary, when in A10 the response is negative, it means that the variations introduced in the controlled variables have produced an increase of the target function, this can happen since the minimum point has been exceeded. In the next step A11 the microprocessor ELAB decides to invert the direction of the previous worsening phase shifting with the attempt to decrease the value of the target function. The inversion of an action when the previous action has produced a worsening in reaching the target is a rather common regulation principle in the function optimization methods, which is also applied in the purely WESt combiner and that shall be applied in the method according to the invention when it shall control FEC impulses. However, the inversion of an action does not restore the system rightly in the previous condition, because in the time elapsed between two actions the propagation conditions can likely be changed, nevertheless the time evolution of the effects of the applied principle is oriented to maintain the values of the target function close to the minimum. In the next step A12, Delta values calculated in A11 are actually introduced in the new voltage rates Vx and Vy generating the desired variation in the phase shifting. In step A12 the couple of A_{Main} and A_{Div} voltage will be subject to a variation whenever the ratio between Vrxm and Vrxd voltage rates has to be rebalanced. Such a situation occurs in case of flat fading detected in the previous reading of the Vagc voltage, together with a strong dissymmetry between Vrxm and Vrxd voltages; it is then appropriate to decrease the lowest of Vrxm or Vrxd received signal. The next step A13 is a waiting step for the completion of the transients similar to step A7, on which completion the program returns to the beginning of step A2 coinciding with the beginning of the method, except for initializations. From the above, it can be noticed that should the test made on the target function in A10 results negative, the program enters a cycle made of steps A2 ö A13 including all the steps of the program and therefore also the internal cycle consisting of steps A4 ö A10.

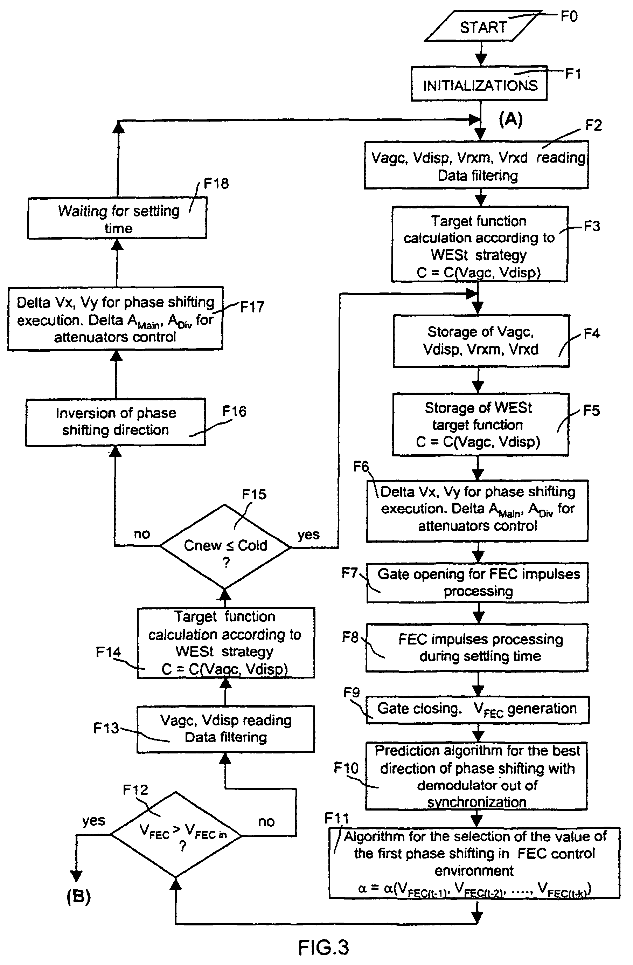

With reference to **Figures 3, 4 and 5,** and to **Figure 1,** it is now disclosed the aim of the present invention, performed by the microprocessor ELAB under the control of a new program stored. The first portion of the global flow chart visible in **Figure 3** is compared with the representation of the flow chart of **Figure 2**, highlighting the relevant. differences. This first part of the method of the invention is that tasked to perform the methods already underway for the control of combiners, in particular the WESt strategy. In the flow chart of Figure 3 we can notice two deep-nested cycles: the inner one includes the additional steps respect to the same internal cycle of Figure 2, while the more external cycle includes the inner one and the same steps of the outer cycle of Figure 2. In **Figure 3** the steps are numbered F0 to F18 and the correspondence with the steps A0 to A13 of **Figure 2** are as follows:

| | |
|---|---|
| F0 ö F6 | A0 ö A6 |
| F7 | New |
| F8 | A7 |
| F9 ö F12 | New |
| F13 ö F18 | A8 ö A13 |

Therefore, it is sufficient to describe the new steps to explain Figure 3. The step F7 immediately follows step F6 (corresponding to step A6 already discussed) in which Delta variations were given to the values of the controlled variables Vx, Vy, A_{Main}, A_{Div}, causing a settling transient in the Vagc voltage (settling time). Step F7 corresponds to the generation of the Reset command by the microprocessor ELAB. This command determines the opening of the measurement gate included in the FEC-INT interface and the starting of the internal timer that establishes the duration of the time window for the count of FEC impulses contained in the FEC-imp signal. In the next step F8 the FEC impulses are read and integrated. A step F9 follows, where the FEC-INT interface closes the measuring gate at the end of a pre-set time equal to the settling time. Therefore, the count of FEC impulses is completely made during the settling time. At this point, the FEC-INT interface can supply the information of the f_{FEC} frequency of FEC impulses, having made a time integration of the impulses themselves inside the measuring window. The obtained V_{FEC} voltage is the additional feedback information sent to the microprocessor ELAB. In an alternative and completely equivalent way, the interface FEC-INT can send the microprocessor ELAB a V_{FEC} digital signal corresponding to the total number of the impulses counted in the measurement window, and the processor obtains on its own the frequency f_{FEC}. Having the measuring window a constant and pre-determined value, it can be sufficient to know only the V_{FEC} counted value of FEC impulses as target function to be minimized above the critical threshold BERth.

The ordering of steps F7, F8 and F9 is strategic since, as already said in the introduction, it enables the FEC-INT interface to take advantage of the settling time to generate the value of the V_{FEC} signal, without slowing down the execution of the internal processing cycle, and enabling the continuous watching of the frequency of FEC impulses without additional charges for the combiner. It must be underlined that the settling time, and therefore the duration of the measuring window, exceeds of some orders of magnitude the symbol T time of the transmitted signal. This means that during the measuring window the TCM-DEC block inside the demodulator DEMOD of Figure 1 could check the correctness or not of a number of symbols, sufficient to give statistical reliability to the number of FEC impulses counted, and consequently to the value expressed by the V_{FEC} signal.

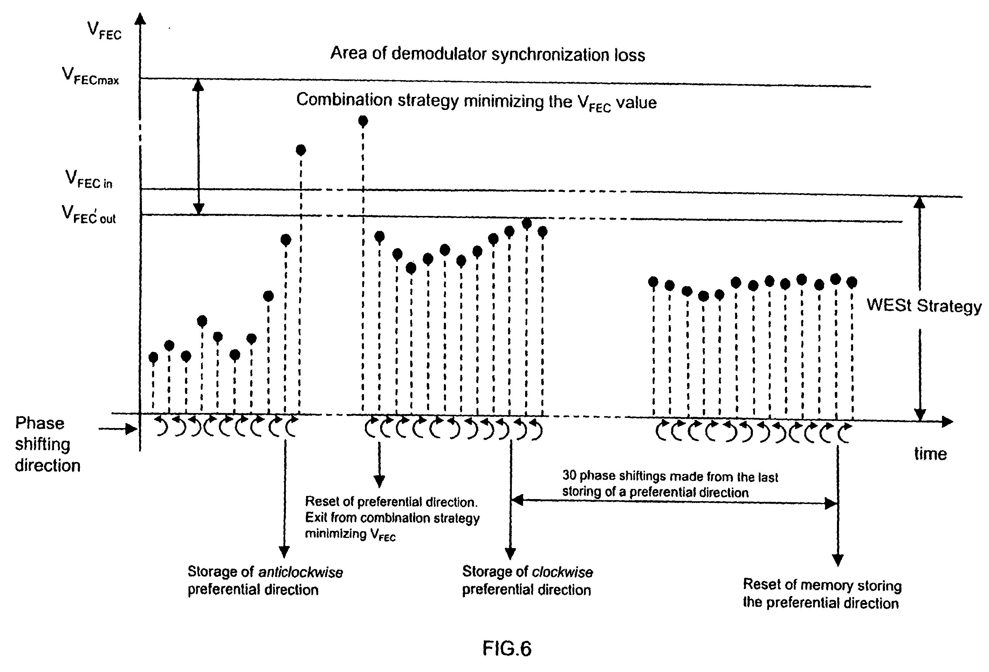

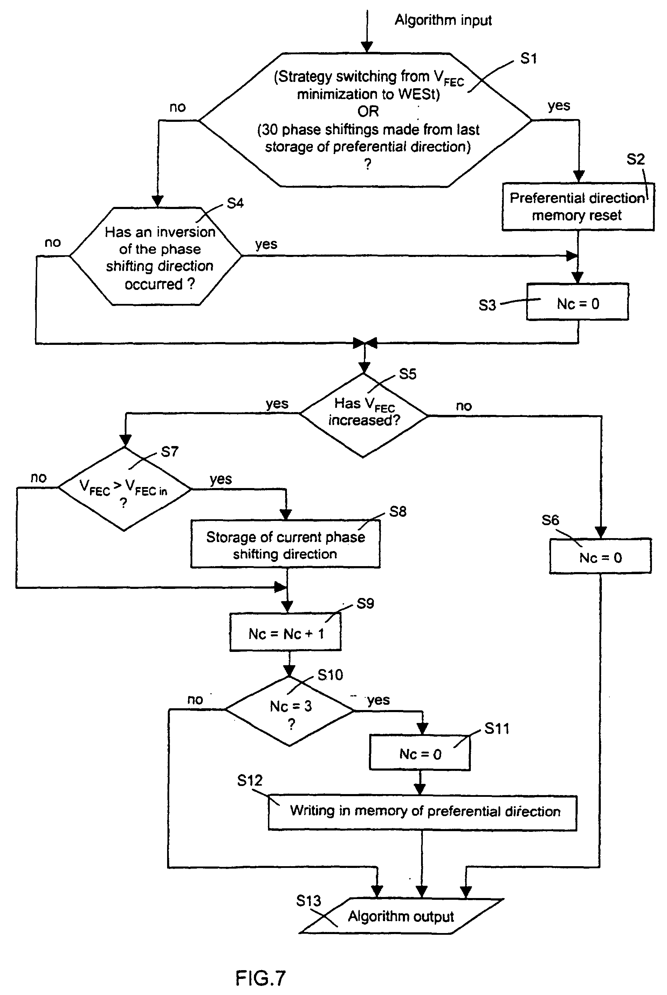

Steps F10 and F11 following step F9 are dedicated to the execution of a prediction algorithm and to a selection algorithm, respectively. The two steps have very short execution time in comparison with the total execution time. The step F10 that summarizes the prediction algorithm, gives a best phase shifting direction to be used as phase shifting direction in case the demodulator loses its synchronization, due to extremely adverse propagation condition and very high BER values. This algorithm shall be dealt with in detail with reference to figures 6 and 7.

The step F11, summarizes that the selection algorithm gives a phase shifting absolute value α to be used as first phase shifting value when the combiner switches the operation strategy from the usual one to that of minimization of the V_{FEC}. This algorithm shall be dealt with in detail after having described the prediction algorithm.

At the end of the two algorithmic steps F10 and F11, a test step F12 is made on the present value of the V_{FEC} to check if it exceeds, or not, a threshold V_{FEC in}. The step F12 is the last one which shows the difference between the method of the invention and the WESt method described in Figure 2. The test of step F12, together with a similar test to be made in step F59, assist in delineating an hysteresis area around a central value of V_{FEC} considered critical to the purposes of the tolerable error rate on data coming out from the demodulator DEMOD. The threshold V_{FEC in} is the upper limit of V_{FEC} beyond which the combination strategy switches from WESt to control of FEC impulses. Therefore, the V_{FEC in} threshold corresponds to the BERth degradation threshold of BER. The V_{FEC out} threshold (enabled in step F59), is the lower limit of V_{FEC} beyond which the combination strategy switches back from the control of FEC impulses to WESt. In the interval of V_{FEC} values included between the lower limit V_{FEC out} of the hysteresis area and the upper limit V_{FEC in}, the combination strategy can be both WESt and control-of FEC impulses, according to the switching direction.

Until the response of the test of step F12 is negative, the change of the combination strategy does not occur and, starting from phase F8 on, we proceed as said for the WESt strategy of Figure 2. On the contrary, when the test of step F12 gives a successful response, the program executes the change of combination strategy going to step F19 where the V_{FEC} is stored.

The flow chart of figures 3, 4 and 5 includes some reference points in the program summarised here after:

| **Reference** | **Location** | **Meaning** |
|---|---|---|
| **A** | Fig.3, between F1 and F2 | Starting of main cycle of WESt strategy |
| **B** | Between Fig.3, F12 (yes) and Fig.4, F19 | V_{FEC} above warning threshold. This implies a further test on the demodulator out of synchronization condition. |
| **C** | Fig.4, between F20 (yes) and F21 | Starting of demodulator synchronization loss management. |
| **D** | between Fig.4, F20 (no) and Fig.5, F42 | V_{FEC} above warning threshold with synchronized demodulator. Starting of V_{FEC} minimization strategy. |
| **E** | between Fig.4, F37 (yes) and Fig.5, F53 | Recover of demodulator synchronization has been obtained. |

In step F20, a test is made on the synchronization condition of demodulator DEMOD to check if the V_{FEC} increase in the previous step F12 was due to a synchronization loss. The operation status of the demodulator is constantly kept controlled by the appropriate test circuits of the diversity receiver , the above-mentioned circuits enable a specific alarm when a loss of synchronization occurs. The test of step F20 could be an interrogation on the presence of the above-mentioned alarm, or a repetitive reading of the V_{FEC} signal to see if it maintains constant at the full scale value, revealing the synchronization loss. The steps ranging from F21 to F41 represent a well configurable part of the program that manages the situation of synchronization loss of the demodulator, with the purpose to restore the in-lock demodulator condition as fast as possible. The steps from F42 to F59 represent another well configurable part of the program that manages the minimization strategy of the V_{FEC} value. For description convenience, it is worth to examine first this second part, to which the program has access when the response in the test made in step F20 is "no".

In step F42 it is made the decision to invert the phase shifting direction, since the previous phase shifting made in step F6 proved to be a worsening one. In the next step F43, the absolute value of the first phase shifting in FEC control environment is acquired, reading the corresponding value α updated in the step F11 by the selection algorithm. The processing made in the next sequence of steps F44, F45 and F46 is described as follows: variations in the controlled variables Vx, Vy, and A_{Main}, A_{Div} → generation of the new value of the target function V_{FEC} caused by said variations. This sequence often repeats in the program, for instance in steps: F6 ö F9; F24 ö F27; F33 ö F36; F50 ö F52; and F54 ö F57. After step F43, the step F44 is executed in which small variations Delta are made to the values of the controlled variables Vx, Vy for the execution of a phase shifting with inverted direction and the mentioned absolute value and, if necessary, to A_{Main}, A_{Div} values for the control of attenuators.

Returning to the sequence of steps F44, F45 and F46, the value V_{FEC} generated in step F46 is submitted to a test in step F47 to check if it has increased, or not, following the phase shifting according to the above mentioned modes. If this occurs, it means that the phase shifting made proved to be a worsening one, in this case in the next step F48, the program performs a test similar to that of step F20 to verify if the demodulator DEMOD has lost its synchronization. In case of affirmative response, the program returns to point **(C)** to have access to the out of synchronization control routine, otherwise, in the following step F49, the step shifting direction is newly inverted to try to correct the previous worsening phase shifting. In this way, the phase shifting direction (not the absolute value) is brought to the original value it had at the end of step F6. The next steps F50, F51 and F52 correspond to the recurring sequence [variations → V_{FEC} generation]. At the end of step F52 a new V_{FEC} value is available for the subsequent processing that starts from step F53 in which the V_{FEC} value is stored.

The entry in step F53 corresponds also to point (**E**) of the program, to which the out of synchronization control routine (F21 ö F41) refers, when demodulator synchronization has been recovered. Another access way to point **(E)** of the program is given starting from the "no" response to the test on the increase of the V_{FEC} value already made in step F47, together with a second test on the V_{FEC} value made in step F59, after step F47, to see if it results lower than the output threshold V_{FEC out}. An additional access way to point **(E)** of the program shall be mentioned in short, at the end of the description of the remaining steps F53 ö F58.

Considering the parts of the program described up to now, an affirmative response to the test of step F59 (V_{FEC} < V_{FEC out} ?) means that the correction action of steps F42 ö F46 proved to be able of effectively reducing the V_{FEC} value bringing it under the output threshold V_{FEC out}, in this case the combination strategy can be switched back to the usual one; in the case of the example, the program returns to point **(A)** to enter the WESt strategy. On the contrary, a negative response to the test of step F59 means that the correction action of steps F42 ö F46 was not sufficient and that said action has to go on. The negative response to the test of step F59 introduces to the next step F53 in which the value V_{FEC} generated in step F46, or generated in step F52 is stored.

The next steps F54 and F57, divided by step F55 and eventually by step F56 that we shall describe later on, correspond to the recurring sequence [variations → V_{FEC} generation]. The step F55 is a test made on the V_{FEC}(t-1) value, which is acquired and stored at the previous cycle. The test of step F55 checks if the value V_{FEC}(t-1) exceeds a V_{FEC lim} value, corresponding to a bit error ratio in line, such for which it results: 10⁻³ < BER < 10⁻². In case of affirmative response, a 0,5 ms waiting time is introduced in step F56, after the new perturbation of the controlled variables made in step F54 and before proceeding to the f_{FEC} measurement in step F57. The additional waiting time has the purpose to prevent errors in the V_{FEC} measurement, with the risk of system instability, when the demodulator is close to a loss of synchronization.

In step F58 a test is made on the V_{FEC} value to evaluate if the succession of steps F54 ö F57 caused an increase or a decrease of such variable. In the hoped case of a decrease, the program returns to the beginning of step F59 to repeat the test on the surpassing of the output threshold V_{FEC out}. In case the test of step F59 (V_{FEC} < V_{FEC out}) is successful, the program returns to point **(A)** marking the switching to the starting WESt strategy; otherwise, the program goes to point **(E)**, reaching it through the above-mentioned additional access way made of test steps F58 and F59. The cycle made of steps F53 ö F59 has particular importance in the method of the present invention because its repetition minimizes the target function: V_{FEC}(Δϕ_{M-D}, ΔP_{M-D}) = V_{FEC}(Vx, Vy, A_{Main}, A_{Div}), where Δϕ_{M-D} is the phase shifting introduced by the phase shifter SFAS moved by the present couple of voltages Vx, Vy, and ΔP_{M-D} is the power logarithmic variation between the Main and Diversity signals caused by the different value of attenuators ATT-M, ATT-D controlled by the present couple of voltages A_{Main}, A_{Div}.

When the test of step F58 highlights a worsening phase shifting made in step F54, the step sequence F48 ö F52 is newly proposed before returning to point (E), attempting to remedy to the worsening phase shifting.

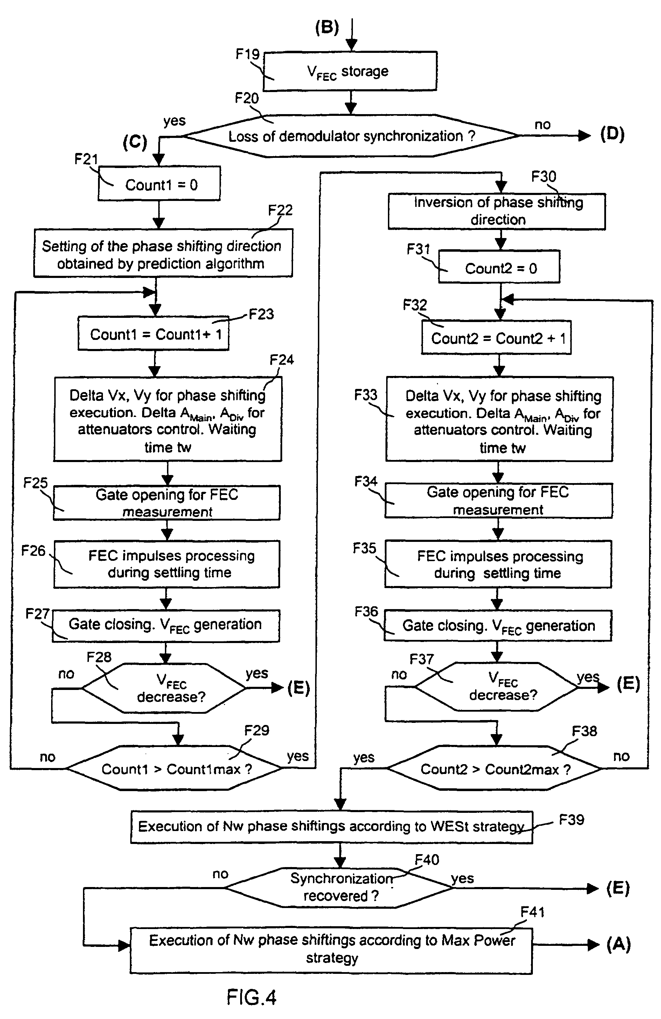

With reference to **Figure 4**, it is now examined the part of the program included between steps F21 and F41 that manages the situation in which the demodulator DEMOD has lost its synchronization. It must be said before that the synchronization circuit of the demodulator DEMOD consists of a phase locked loop, or PLL, (Phase-Locked Loop) following up the Vout reference signal, first in frequency and then in phase. A loss of the PLL synchronization can be caused, for instance, by phenomena of simultaneous fading on Main and Diversity signals. Under critical propagation conditions , defined by all the following parameters:
- frequency, depth and phase of the notch on the Main signal,
- frequency, depth and phase of the notch on the Diversity signal,
- delay of echoes on the two ways,
- fading speed,
- field intensity received by antenna ANT-M and antenna of the ANT-D antenna,
the recovery of phase locking by the PLL synchronizing the demodulator may result to be impossible, for any phase shifting and value of attenuators ATT-M, ATT-D set on the basis of the combination strategy above the degradation threshold BERth. In this case, the frequency f_{FEC} assumes a full-scale value, no more depending on the action of the combiner. To come out from the unlocked condition of the demodulator, it is then important the contribution given by this part of the program, which foresees the possibility of synchronization recovery in three different points, where the program may return to point **(E)**. It is worth to notice once again that before returning to point **(E)** the method is made with the demodulator completely out of synchronization and therefore with V_{FEC} value constantly at full scale. It is the decrease of the V_{FEC} from the full-scale value that indicates the possible synchronization recovery. In **Figure 4** two step-cycles can be seen, plus one queue, tasked of the synchronization recovery. The two cycles consist of steps F23 ö F29 and F32 ö F38, respectively, that differ only in the sign of the first phase shifting. The second recovery cycle is made, if necessary, only after completion of the first cycle. At the end of the second cycle the remaining steps F39, F40 and F41 are performed. The more significant action made in the part of program of Figure 4 in order to facilitate the synchronization recovery, is the continuous variation of the phase shifting Δϕ.

This said, in step F21, whose input matches also point **(C)** of the program, a first counter Count1 used to count the number of iterations of the first synchronization recovery cycle F23 ö F29 is reset. In the next step F22 the phase shifting direction updated in step F10 by the prediction algorithm is read; the counter Count1 is then increased in the following step F23. The next sequence of steps F24 ö F27 corresponds to the recurring sequence [variations → V_{FEC} generation], followed by the test step F28 to check if the V_{FEC} has decreased from the full-scale value. A possible positive response means that the demodulator DEMOD has recovered its synchronization already during the first recovery cycle, in this case the program goes to point (**E**) for the execution of the processing already described. A negative response in step F28 involves the execution of a test on the value counted by counter Count1 in the following step F29, to check the possible surpassing of a first maximum count pre-set value Count1max. If the surpassing does not occur, the program forces to step 23 for the increase of the counter Count1 and the repetition of the first recovery cycle, while in case of surpassing of the maximum count value there is a return to step F30 to enter the second recovery cycle.

In step F30 a decision is made to change the direction of the last phase shifting set in the previous recovery cycle, and particularly in step F24, since the first recovery cycle in practice did not succeed in converging in the time allowed. In the next step F31 a second counter Count2 used to count the number of iterations of the second recovery cycle F32 ö F38 is reset. Afterwards, the subsequent steps F32 to F38 are identical to the previous steps F23 to F29, with the new reference to Count2 and to the surpassing of a second pre-set maximum count value Count2max. Even during the second recovery cycle a return to point **(E)** of the program can occur in case of demodulator synchronization recovery.

The joint action of the first and second recovery cycle of the synchronization visible in the flow-chart of **Figure 4** can be able to restore the demodulator synchronization in a great part of the situations that can be detected during the normal operation; however, in particularly adverse situations and generally due to the lasting of high intensity atmospheric events, it can happen that also the counter Count2 exceeds the maximum count without synchronization recovery. In this case, the program acknowledges that the control strategy of FEC impulses proved to be ineffective and proposes again the execution of a pre-set number Nw of phase shifting according to WESt strategy in the next step F39, afterwards a test is made in step F40 to check if the demodulator DEMOD has recovered its synchronization. In the affirmative, the program returns to point **(E)**; on the contrary, if the recovery did not occur, the program tries to recover the demodulator synchronization through an alternative combination strategy, for instance the known one that maximizes the power of the combined signal (Max Power) without considering the amplitude distortion of the relevant spectrum. The next step F41 provides to this purpose, in which a pre-set number Nw of phase shifting is made according to the Max Power strategy. After this, without performing any test on the demodulator synchronization condition, the program returns to the starting point **(A)** for the execution of the starting WESt strategy.

The method shown in the global flow chart of **figures 3, 4** and **5** can be applied to combination strategies different from the WESt one; it can for instance be applied in combiners employing the Max Power strategy, in this case they do not have the DISP network for the measurement of the amplitude dispersion. Other combination strategies different from the WESt one can also not require the use of attenuators on the two branches of the combiner, the controlled variables A_{Main}, A_{Div} and the variation steps of the same shall then be lacking. On the basis of the description supplied, the sector technician can easily adapt the method of the invention to the contingent case.

With reference to **figures 6 and 7** it is now examined the prediction algorithm of the best phase shifting direction with demodulator out of synchronization. The contribution of this algorithm is useful to the purposes of the limitation of signature areas, since it sets a preferential phase shifting direction, clockwise or anticlockwise, facilitating the recovery of the synchronization by the demodulator in the shortest possible time. Looking at **Figure 3** we see that both the algorithmic steps F10 and F11 are included in the double loop system performing the combination under the threshold V_{FEC in}, that is, in the area where the usual strategy (in this case WESt) is ruling; this means that the elements on which the predictions and/or choices are ground, shall be confined in an environment in which V_{FEC} values are under the V_{FEC in} threshold, because when the V_{FEC in} threshold is exceeded, the microprocessor ELAB abandons this part of the program, temporarily discontinuing the execution of the two algorithmic steps F10 and F11 that keep in memory the results processed up to that time. Both F10 and F11 steps are based on the phase shifting made in step F6 of Figure 3, preceding the entry in the above-mentioned steps. The correct execution of algorithms requires the provision of a first memory capable of storing at least the last 30 phase shifting directions and the V_{FEC} values generated coinciding with each phase shifting (30 values of V_{FEC}), and of a second memory to store the last preferential phase shifting direction that has been evaluated.

**Figure 6** shows three sequences of V_{FEC} values separated each other from an undetermined time amount. The example is given to illustrate the algorithm underneath; in the reality the sequence is unique. Inside each sequence, V_{FEC} values are equispaced and, the direction of the phase shifting that determined the passage from the previous V_{FEC} value to the next value is highlighted between two consecutive values, through a small bent arrow. In **Figure 6** are also highlighted V_{FEC in} and V_{FEC out} thresholds delimiting the hysteresis band; the amplitudes of the two regions relating to the different combination strategies, and the full scale value V_{FEC max} with PLL out of lock. The sequence on the far left shows some values V_{FEC} placed under the threshold V_{FEC out}, except for the ending part where a series of worsening clockwise phase shifting involves an upward progression of four consecutive V_{FEC} values, the last one of which exceeds the V_{FEC in} threshold invading the area where the combination strategy tends to minimize the V_{FEC} value. Coinciding with the third worsening clockwise phase shifting, and therefore with a V_{FEC} value still under the V_{FEC in} threshold, the execution of a storage step of a preferential anticlockwise direction is indicated, that is opposite to the clockwise one of the worsening series.

The central sequence of V_{FEC} values shows in its starting part a first value above the V_{FEC in} threshold and a second value that, thanks to an improving clockwise phase shifting, is brought under the V_{FEC out} threshold in the area involved in the WESt combination strategy. Coinciding with the downward crossing of the threshold V_{FEC out} the preferential direction is deleted from memory under the control of the microprocessor ELAB. In the ending part of the central sequence, an upward progression can be seen of four consecutive V_{FEC} values, determined by a clockwise worsening series phase shifting, the last value remaining under the threshold V_{FEC out}. Coinciding with the third consecutive clockwise phase shifting of the above-mentioned worsening series, it is indicated the execution of a storage step of a preferential clockwise direction, that is, opposite to the anticlockwise of the worsening series.

The analysis of the two phase shifting sequences examined up to now, highlights two rules identifying the behaviour of the prediction algorithm of the best phase shifting direction with demodulator out of synchronization. The first rule is that the memory of the preferential direction is reset on the moment of crossing below threshold V_{FEC out}. The second rule is that the algorithm considers the time trend of the V_{FEC} value in the operation area under the threshold V_{FEC out} where the WESt strategy is ruling (or in the relevant hysteresis area), performing a test at each new phase shifting to check the possible succession of three consecutive phase shifting in the same direction each one having had the effect to increase the V_{FEC} value, and on occurrence of the above-mentioned condition the subject algorithm stores as preferential direction the opposite direction versus the one of the last three worsening phase shifting. The circumstance that determines the condition on the worsening phase shifting can occur during the critical propagation cases mentioned in the introduction as being at the basis of the technical problem solved by the present invention.

The third sequence of V_{FEC}, values visible on the far right of Figure 6, includes values all under the V_{FEC out} threshold that do not originate a succession of three worsening consecutive phase shiftings all having the same direction. Between one of the values V_{FEC} of the central sequence and a V_{FEC} value of the third sequence there is a time interval including 30 consecutive phase shiftings (having any direction) from the last storage of the preferential clockwise direction, made during the central sequence. Coinciding with the 30^{th} phase shifting a cancellation step of the preferential phase shifting direction from memory is indicated. It is then possible to highlight the following third rule that identifies the behaviour of the prediction algorithm, that is: on completion of a pre-set number of phase shiftings from the last storage of the preferential direction, and simultaneously to the fact that these phase shiftings did not cause the surpassing of the V_{FEC in} threshold for the switching from the WESt strategy to the minimization strategy of V_{FEC} value, the prediction algorithm deletes the preferential phase shifting direction from memory, since it does no more consider it indicative of the present state of the receiver and of the changeable propagation conditions. In some cases, fast fading phenomena (e.g.: notch speed > 50 MHz/s) may cause the surpassing of the critical threshold V_{FEC} > V_{FEC in} before that prediction algorithm has identified a preferential direction according to the third rule just mentioned. In this case, the behaviour of the prediction algorithm is adjusted to the following fourth rule: on the moment of the demodulator synchronization loss, the phase shifting direction is selected, opposite to that of the last phase shifting that caused an increase of V_{FEC} such not to exceed the threshold V_{FEC in}.

**Figure 7** is a flow-chart of the program for the prediction algorithm, corresponding to step F10 of Figure 3, whose implementation rules have been illustrated with reference to the time diagram of Figure 6. Entry in step F10 of Figure 3 coincides also with the input of a starting step S1 of the diagram of Figure 6. The step S1 is a test step in which it is queried if the last stored preferential direction has to be deleted. For convenience, step S1 is not further specialised to check the conditions on the fourth implementation rule of the subject algorithm, and for this reason the 30 phase shiftings have to be intended as all made in the region under the V_{EEC out} threshold. An affirmative response in step S1 involves in step S2 the deletion of the preferential phase shifting direction from the relevant memory, for the reasons said above, and the reset of a counter of the number Nc of consecutive worsening phase shiftings in step S3. A negative response in step S1 involves in step S4 the execution of a test on the memory content that maintains the direction of the last phase shiftings, to check if the direction of the new phase shifting is inverted versus the previous phase shifting direction. This test is used in the application of the second implementation rule mentioned above. An affirmative response to test in S4 forces to the execution of step S3 of Nc counter reset, and then to a subsequent step S5, while a negative response in S4 directly drives to step S5 avoiding resetting the counter of consecutive phase shifting Nc.

The next steps S5 to S12 all belong to the second implementation rule of the prediction algorithm of the best direction, and lead through different ways to the final step S13 marking the exit from the present algorithm to enter the selection algorithm corresponding to step F11 of Figure 3. The test made in S5 ascertains if the last phase shifting was a worsening one. Should the response be "no" in S5, a reset step S6 of the count Nc, similar to the S3 is made, to directly go to step S13, which is the exit from the algorithm. If in S5 a worsening phase shifting is detected, a new test step S7 is made to determine if the new V_{FEC} has exceeded, or not, the high V_{FEC in} threshold. In case of surpassing, memory is however kept in S8 of the last phase shifting direction immediately before the one that brought V_{FEC} above the high threshold V_{FEC in}. This information could be useful in the management of a possible synchronization loss of the demodulator, whenever, as already said, fast fading phenomena have not enabled the identification of a preferential direction. The two occurrences generated by test in S7 converge in step S9 in which the count Nc is increased. The next step S10 is a test step in which it is asked if Nc = 3. A negative response to the test in S10 involves the exit from the algorithm without modifying the already existing preferential phase shifting direction. A positive response to test in S10 involves on the contrary the reset of the count Nc in step S11, and in step S12 the writing of the current phase shifting direction in the memory of the preferential direction, before quitting the prediction algorithm.

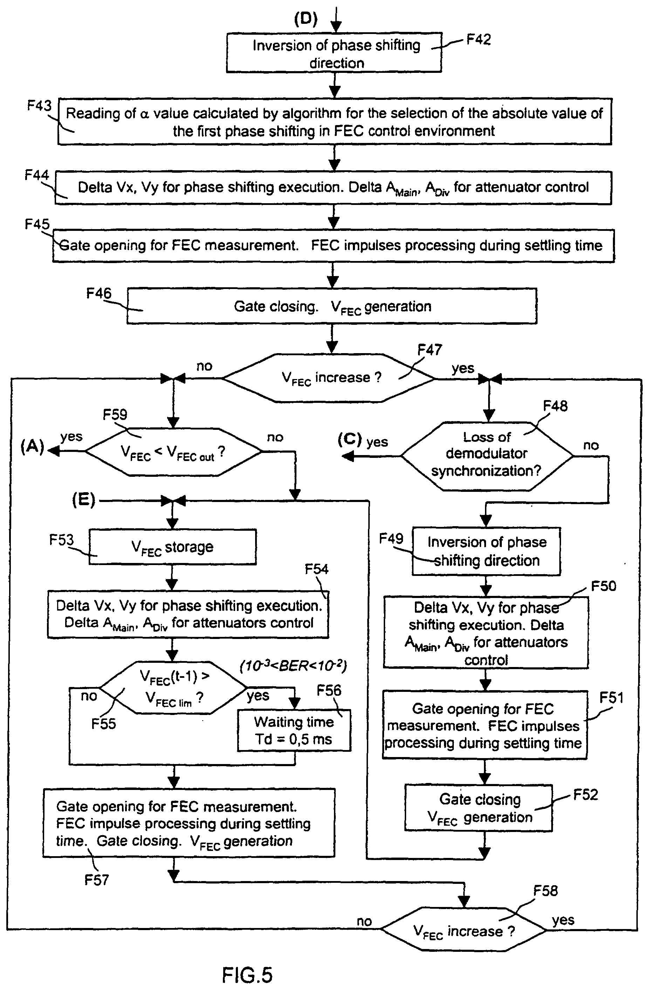

It is now examined the selection algorithm of the absolute value of the first phase shifting to be used on switching from the WESt strategy to the minimization strategy of the V_{FEC} value, being the direction of said first phase shifting already determined by the inversion step F42 of Figure 5. This selection algorithm, which corresponds to step F11 of Figure 3, finds justification in the fact that thanks to an opportune selection of the absolute value α of said phase shifting, in addition to the direction, it is possible under several fading conditions to immediately return under the BERth threshold of critical BER. From the implementation point of view, it is useful to avail of the results of the prediction algorithm to introduce a simplification to function α indicated in step F11 (Figure 3). In the simplification the following rule is applied:
- if a preferential phase shifting direction is present in the memory, then we take α = 12° and the direction of the first phase shifting coinciding with the preferential direction;
- if on the contrary a preferential direction is not present in the memory, then we take α = 3° and as direction of the first phase shifting we take the opposite direction to the one that caused the surpassing of the high threshold V_{FEC in} for the switching to minimum V_{FEC} combination, as highlighted by the test made in step S8. The values indicated above for angle α have indicative meaning.

## Claims

1. Combination method of radio signals received in space diversity technique, that can be implemented through a programmable control unit (ELAB), performing a first iterative optimization procedure of the quality of the combined signal (WESt), controlling a variation in the phase shifting (ϕ) introduced by a phase shifter (SFAS) placed on one of the two branches of the combiner (ATT-M, ATT-D, SFAS, SOM, IF-AGC, DISP, ELAB) of said signals received, and controlling the amplitude of said signals (Vrxm. Vrxd), and evaluating the effects of said variations on the combined signal (Vcomb) through power (Vagc) and amplitude distortion (Vdisp) measurements in the band of the modulated signal (Vout), said first procedure being selectable among the known ones, **characterized in that** it also includes the following steps:
- frequency measurement of correction impulses (FEC-imp) emitted by a demodulator (DEMOD, TCM-DEC) placed downstream said combiner, where each impulse corresponds to errors detected in demodulated symbols before their correction, the measurement being continuously made within a time window having pre-set duration opened by said programmable control unit (ELAB, Reset) after each variation made to said phase shifting;
- comparison of each frequency measured value of the correction impulses (FEC-imp) with a threshold value (V_{FEC in}) corresponding to an error ratio on data in line considered critical and hardly remediable with said first optimization procedure (WESt);
- switching of the operation from said first (WESt) to a second iterative procedure for the optimization of the quality of the combined signal (Vout), whenever said measured frequency value of correction impulses (FEC-imp) exceeds said critical threshold on the error ratio (V_{FEC in}), the second procedure introducing variations in said phase shifting (ϕ), and possibly in the amplitude of said signals received (Vrxm. Vrxd), in the direction of the decrease of a measured frequency value of correction impulses (FEC-imp), up to bringing the same measured value under said critical threshold (V_{FEC out}), and
- switching of the operation from said second to said first procedure (WESt) when the measured frequency value of correction impulses (FEC-imp) returns under said critical threshold (V_{FEC out}).

2. Combination method of radio signals received in space diversity technique according to claim 1, **characterized in that** said measuring window having pre-set duration has duration equal to the settling time of the amplitude of the combined signal (Vcomb) caused by transients occurring after each variation of the phase shifting (ϕ), enabling the execution of said frequency measurement of correction impulses (FEC-imp) without slowing down the execution of said optimization procedure.

3. Combination method of radio signals received in space diversity technique according to claim 1 or 2, **characterized in that** said critical threshold on the error ratio is subject to hysteresis (V_{FEC in}, V_{FEC out}).

4. Combination method of radio signals received in space diversity technique according to any one of the previous claims, **characterized in that** each iteration of said first iterative optimization procedure (WESt) contributes to the determination of a preferential phase shifting direction to be used in case of demodulator synchronization loss, this situation being highlighted by constant full scale values (V_{FEC max}) of said frequency measurements of correction impulses (FEC-imp).

5. Combination method of radio signals received in space diversity technique according to claim 4, **characterized in that** each iteration of said first iterative optimization procedure (WESt) contributes to the determination of an absolute phase shifting value to be used on the moment of switching from said first to said second quality optimization procedure of the combined signal (Vout).

6. Combination method of radio signals received in space diversity technique according to claim 5, **characterized in that** after a variation in said phase shifting (ϕ), and possibly after a variation in the amplitude of said signals received (Vrxm. Vrxd), a first test is made to check if said measured frequency value of correction impulses (FEC-imp) results increased and, in case of affirmative response in said first test, a second test is made, checking if the demodulator (DEMOD) has lost its synchronization, while in case of negative response in said first test, the execution of said first iterative optimization procedure (WESt) goes on.

7. Combination method of radio signals received in space diversity technique according to claim 6, **characterized in that** when said second test reveals a synchronization loss of the demodulator (DEMOD), the said preferential phase shifting direction is set and a first recovery cycle is made having a first maximum pre-set number of variation iterations in said phase shifting (ϕ), and possibly in the amplitude of said signals received (Vrxm. Vrxd), to try to decrease said measured frequency value of correction impulses (FEC-imp) under said full scale value.

8. Combination method of radio signals received in space diversity technique according to claim 7, **characterized in that** on surpassing of said first maximum pre-set number of iterations, the phase shifting (ϕ) direction is inverted and a second recovery cycle performed, identical to said first cycle, and having a second maximum pre-set number of iterations to try to decrease said measured frequency value of correction impulses (FEC-imp) under said full scale value.

9. Combination method of radio signals received in space diversity technique according to claim 8, **characterized in that** on surpassing of said second maximum pre-set number of iterations, a maximum pre-set number of phase shiftings is made according to said first optimization procedure and, if the demodulator synchronization has not yet been recovered, the same pre-set number of phase shiftings is made according to a third optimization procedure selected among the known ones different from said first procedure.

10. Combination method of radio signals received in space diversity technique according to any of the previous claims, **characterized in that** the direction of said phase shifting is subject to an inversion on the moment of switching from said first to said second iterative quality optimisation procedure of the combined signal (Vout).

11. Combination method of radio signals received in space diversity technique according to claim 4, **characterized in that** at each iteration of said first iterative optimization procedure (WESt) the direction of said phase shifting (ϕ) and the corresponding said measured frequency value of the correction impulses (FEC-imp) are stored in a memory including a pre-set number of values of said rates corresponding to at least the last 30 values.

12. Combination method of radio signals received in space diversity technique according to claim 11, **characterized in that** at each iteration of said first iterative optimization procedure (WESt) it is checked the condition of three consecutive worsening phase shiftings with same direction, that is, each one having had the effect to increase the corresponding frequency value stored of the correction impulses (FEC-imp), and on occurrence of the above-mentioned condition, the direction opposite to that of the last three worsening phase shifting is chosen as preferential direction, said preferential direction being stored in a memory of the preferential phase shifting direction.

13. Combination method of radio signals received in space diversity technique according to claim 12, **characterized in that** said memory of the preferential phase shifting direction is reset at each switching of the operation from said second to said first (WESt) optimization procedure.

14. Combination method of radio signals received in space diversity technique according to claim 13, **characterized in that** on completion of 30 consecutive phase shiftings from the last storage of said preferential phase shifting direction, simultaneously to the fact that the condition on the occurrence of said three identical worsening consecutive phase shifting direction has not occurred, said memory of the phase shifting preferential direction is deleted since it does not indicate anymore the current state of said combiner as a consequence of the changing propagation conditions.

15. Combination method of radio signals received in space diversity technique according to claim 14, **characterized in that** on occurrence of a synchronization loss of said demodulator (DEMOD) simultaneously to the fact that said preferential phase shifting direction could not be determined, it is selected the phase shifting direction opposite to that of the last phase shifting that caused an increase of said measured frequency value of correction impulses (FEC-imp) such not to exceed said threshold (V_{EEC in}) corresponding to an error rate on data considered critical.

16. Combination method of radio signals received in space diversity technique according to claim 12, **characterized in that** whenever a preferential direction is present in memory, the first phase shifting of said second iterative optimization procedure has an absolute value equal to 12° and the corresponding phase shifting direction coincides with the preferential direction stored.

17. Combination method of radio signals received in space diversity technique according to claim 14, **characterized in that** whenever a preferential direction could not be stored in memory, the first phase shifting of said second iterative optimization procedure has an absolute value equal to 3° and the corresponding phase shifting direction coincides with the direction opposite to the last phase shifting that caused the surpassing of said threshold (V_{FEC in}) corresponding to an error ratio on data considered critical.

18. Combiner of radio signals received in space diversity technique, including a programmable phase shifter (SFAS) placed on one of the two branches crossed by the reception signals, also including optional variation means (ATT-M, ATT-D) of the amplitude of said reception signals (Vrxm. Vrxd), and a programmable control unit (ELAB) performing a first iterative procedure for the optimisation of the combined signal quality (WESt) controlling a variation in the phase shifting (ϕ) introduced by said phase shifter (SFAS), and in the amplitude of said signals (Vrxm. Vrxd), and evaluating the effects of said variations on the combined signal (Vcomb) through power (Vagc) and amplitude distortion (Vdisp) measurements in the band of the modulated signal (Vout), said first procedure being selectable among the known ones, **characterized in that** it also includes:
- measuring means (FEC-INT) of the frequency of the correction impulses (FEC-imp) emitted by a demodulator (DEMOD, TCM-DEC) placed downstream of said combiner, the demodulator emitting a correction impulse, where each impulse corresponds to errors detected in demodulated symbols before their correction, said programmable control unit (ELAB) generating a measurement enable signal (Reset) at the beginning of a time slot of pre-set duration, subsequent to each variation made to said phase shifting (ϕ), and within such time slot said measuring means (FEC-INT) performing said V_{FEC} measurement ;
- comparison means (ELAB) of each measured frequency value relative to correction impulses (FEC-imp) with a threshold value (V_{FEC in}) corresponding to an error rate on data considered critical and barely remediable with said first optimisation procedure (WESt);
- switching means (ELAB) to change operation from said first (WESt) to a second iterative procedure for the optimisation of the quality of the combined signal (Vout), whenever the measured frequency value of correction impulses (FEC-imp) exceeds said critical threshold on the error rate (V_{FEC in}),
- execution means of said second optimization procedure, coinciding with said programmable control unit (ELAB), performing said second procedure controlling variations in said phase shifting (ϕ), and possibly in the amplitude of said received signals (Vrxm. Vrxd), in the direction of the decrease of a measured frequency value of correction impulses (FEC-imp), up to bringing the same measured value under said critical threshold (V_{FEC out}), and
- switching means (ELAB) of the operation from said second to said first procedure (WESt) when the measured frequency value of correction impulses (FEC-imp) returns under said critical threshold (V_{FEC out}).

19. Combiner of radio signals received in space diversity technique according to claim 18, **characterized in that** said measuring means (FEC-INT) of the frequency of correction impulses (FEC-imp) include:
- a measuring logic port crossed by said correction impulses (FEC-imp) starting from the reception of said measurement enabling signal (Reset);
- counting means (FEC-INT, ELAB) counting a time interval equal to the settling time of the amplitude of the combined signal (Vcomb) caused by transients that occur after each variation of said phase shifting (ϕ), said counting means disabling said measuring logic port when the counted time elapses.

20. Combiner of radio signals received in space diversity technique according to claim 18 or 19, **characterized in that** said comparison means (ELAB) generate a hysteresis (V_{FEC in}, V_{FEC out}) around said critical threshold for the error ratio on data.

21. Combiner of radio signals received in space diversity technique according to any claim 18 to 20, **characterized in that** it includes means for the determination of a preferential direction of phase shifting to be used in case of synchronization loss of the demodulator (DEMOD), said means being enabled during each iteration of said first optimization procedure (WESt).

22. Combiner of radio signals received in space diversity technique according to claim 21, **characterised in that** it includes means for the determination of an absolute phase shifting value to be used on the moment of switching from said first to said second optimization procedure of the quality of combined signal (Vout), said means being enabled during each iteration of said first optimization procedure (WESt).

23. Combiner of radio signals received in space diversity technique according to claim 21, **characterized in that** it includes means (ELAB) to determine the synchronization loss of the demodulator (DEMOD) checking the presence of full scale constant values (V_{FEC max}) of said frequency measures of correction impulses (FEC-imp).

24. Combiner of radio signals received in space diversity technique according to claim 23, **characterized in that** it includes means (ELAB) to facilitate the synchronization recovery of the demodulator (DEMOD) through setting of said phase shifting preferential direction.

## Patentansprüche

1. Kombinationsverfahren für in Raumdiversity-Technik empfangene Funksignale, welches über ein programmierbares Steuergerät (ELAB) implementiert werden kann, das eine erste iterative Prozedur zur Optimierung der Qualität des kombinierten Signals (WESt) ausführt, indem es eine Änderung der Phasenverschiebung (ϕ) steuert, die durch einen an einem der beiden Zweige des Combiners (ATT-M, ATT-D, SFAS, SOM, IF-AGC, DISP, ELAB) der besagten empfangenen Signale angebrachten Phasenschieber (SFAS) vorgenommen wird, und indem es die Amplitude der besagten Signale (Vrxm. Vrxd) steuert, und indem es die Auswirkungen der besagten Änderungen auf das kombinierte Signal (Vcomb) durch Messungen der Leistung (Vagc) und der Amplitudenverzerrung (Vdisp) im Band des modulierten Signals (Vout) auswertet, wobei die besagte erste Prozedur unter den bekannten Prozeduren ausgewählt werden kann, **dadurch gekennzeichnet, dass** es außerdem die folgenden Schritte umfasst:
- Frequenzmessung von Korrekturimpulsen (FEC-imp), die von einem Demodulator (DEMOD, TCM-DEC) ausgesendet werden, der nach dem besagten Combiner angeordnet ist, wobei jeder Impuls Fehlern entspricht, die in demodulierten Zeichen vor ihrer Korrektur erkannt wurden, wobei die Messung kontinuierlich innerhalb eines Zeitfensters mit vorgegebener Dauer durchgeführt wird, das von dem besagten programmierbaren Steuergerät (ELAB, Reset) nach jeder an der . besagten Phasenverschiebung vorgenommenen Änderung geöffnet wird;
- Vergleich jedes Messwertes der Frequenz der Korrekturimpulse (FEC-imp) mit einem Schwellwert (V_{FEC in}), der einer Fehlerrate von hintereinander übertragenen Daten entspricht, die als kritisch und kaum mit der besagten ersten Optimierungsprozedur (WESt) behebbar betrachtet wird;
- Umschalten des Betriebs von der besagten ersten (WESt) auf eine zweite iterative Prozedur zur Optimierung der Qualität des kombinierten Signals (Vout) immer dann, wenn der besagte Messwert der Frequenz der Korrekturimpulse (FEC-imp) den besagten kritischen Schwellwert für die Fehlerrate (V_{FEC in}) überschreitet, wobei durch die zweite Prozedur Änderungen an der besagten Phasenverschiebung (ϕ) und möglicherweise an der Amplitude der besagten empfangenen Signale (Vrxm, Vrxd) in Richtung der Verringerung eines Messwertes der Frequenz der Korrekturimpulse (FEC-imp) vorgenommen werden, bis sich der besagte Messwert bis unter den besagten kritischen Schwellwert (V_{FEC out}) verringert hat; und
- Umschalten des Betriebs von der besagten zweiten auf die besagte erste Prozedur (WESt), wenn sich der Messwert der Frequenz der Korrekturimpulse (FEC-imp) wieder bis unter den besagten kritischen Schwellwert (V_{FEC out}) verringert hat.

2. Kombinationsverfahren für in Raumdiversity-Technik empfangene Funksignale nach Anspruch 1, **dadurch gekennzeichnet, dass** das besagte Messungsfenster mit vorgegebener Dauer eine Dauer hat, die gleich der Ausregelzeit der Amplitude des kombinierten Signals (Vcomb) ist, die durch nach jeder Änderung der Phasenverschiebung (ϕ) ablaufende Übergangsvorgänge verursacht wird, was die Durchführung der besagten Frequenzmessung der Korrekturimpulse (FEC-imp) ermöglicht, ohne dass die Ausführung der besagten Optimierungsprozedur verlangsamt wird.

3. Kombinationsverfahren für in Raumdiversity-Technik empfangene Funksignale nach Anspruch 1 oder 2, **dadurch gekennzeichnet, dass** der besagte kritische Schwellwert für die Fehlerrate mit Hysterese (Y_{FEC in}, V_{FEC out}) behaftet ist.

4. Kombinationsverfahren für in Raumdiversity-Technik empfangene Funksignale nach einem der vorhergehenden Ansprüche, **dadurch gekennzeichnet, dass** jede Iteration der besagten ersten iterativen Optimierungsprozedur (WESt) zur Bestimmung einer bevorzugten Richtung der Phasenverschiebung beiträgt, die im Falle eines Synchronisationsverlustes des Demodulators zu verwenden ist, wobei diese Situation durch konstante Skalenendwerte (V_{FEC max}) der besagten Frequenzmessungen der Korrekturimpulse (FEC-imp) gekennzeichnet ist.

5. Kombinationsverfahren für in Raumdiversity-Technik empfangene Funksignale nach Anspruch 4, **dadurch gekennzeichnet, dass** jede Iteration der besagten ersten iterativen Optimierungsprozedur (WESt) zur Bestimmung eines Absolutwertes der Phasenverschiebung beiträgt, der zum Zeitpunkt des Umschaltens von der besagten ersten auf die besagte zweite Prozedur zur Optimierung der Qualität des kombinierten Signals (Vout) zu verwenden ist.

6. Kombinationsverfahren für in Raumdiversity-Technik empfangene Funksignale nach Anspruch 5, **dadurch gekennzeichnet, dass** nach einer Änderung der besagten Phasenverschiebung (ϕ) und möglicherweise nach einer Änderung der Amplitude der besagten empfangenen Signale (Vrxm. Vrxd) ein erster Test durchgeführt wird, um zu prüfen, ob sich der besagte Messwert der Frequenz der Korrekturimpulse (FEC-imp) erhöht hat, und dass im Falle einer positiven Antwort bei diesem ersten Test ein zweiter Test durchgeführt wird, mit dem geprüft wird, ob ein Synchronisationsverlust des Demodulators (DEMOD) eingetreten ist, während im Falle einer negativen Antwort bei dem besagten ersten Test die Ausführung der besagten ersten iterativen Optimierungsprozedur (WESt) fortgesetzt wird.

7. Kombinationsverfahren für in Raumdiversity-Technik empfangene Funksignale nach Anspruch 6, **dadurch gekennzeichnet, dass**, wenn bei dem besagten zweiten Test ein Synchronisationsverlust des Demodulators (DEMOD) festgestellt wird, die besagte bevorzugte Richtung der Phasenverschiebung festgelegt wird und ein erster Wiederherstellungs-Zyklus durchgeführt wird, der eine erste vorgegebene maximale Anzahl von Iterationen der Änderung der besagten Phasenverschiebung (ϕ) und möglicherweise der Amplitude der besagten empfangenen Signale (Vrxm. Vrxd) aufweist, um zu versuchen, den besagten Messwert der Frequenz der Korrekturimpulse (FEC-imp) bis auf einen Wert unter dem besagten Skalenendwert zu verringern.

8. Kombinationsverfahren für in Raumdiversity-Technik empfangene Funksignale nach Anspruch 7, **dadurch gekennzeichnet, dass** bei einer Überschreitung der besagten ersten vorgegebenen maximalen Anzahl von Iterationen die Richtung der Phasenverschiebung (ϕ) umgekehrt wird und eine zweiter Wiederherstellungs-Zyklus durchgeführt wird, der mit dem besagten ersten Zyklus identisch ist und eine zweite vorgegebene maximale Anzahl von Iterationen aufweist, um zu versuchen, den besagten Messwert der Frequenz der Korrekturimpulse (FEC-imp) bis auf einen Wert unter dem besagten Skalenendwert zu verringern.

9. Kombinationsverfahren für in Raumdiversity-Technik empfangene Funksignale nach Anspruch 8, **dadurch gekennzeichnet, dass** bei einer Überschreitung der besagten zweiten vorgegebenen maximalen Anzahl von Iterationen eine vorgegebene maximale Anzahl von Phasenverschiebungen entsprechend der besagten ersten Optimierungsprozedur durchgeführt wird, und dass, falls die Synchronisation des Demodulators noch nicht wiederhergestellt worden ist, dieselbe vorgegebene Anzahl von Phasenverschiebungen entsprechend einer dritten, unter den bekannten Prozeduren ausgewählten Optimierungsprozedur durchgeführt wird, die von der besagten erste Prozedur verschieden ist.

10. Kombinationsverfahren für in Raumdiversity-Technik empfangene Funksignale nach einem der vorhergehenden Ansprüche, **dadurch gekennzeichnet, dass** die Richtung der besagten Phasenverschiebung zum Zeitpunkt des Umschaltens von der besagten ersten auf die besagte zweite iterative Prozedur zur Optimierung der Qualität des kombinierten Signals (Vout) eine Umkehrung erfährt.

11. Kombinationsverfahren für in Raumdiversity-Technik empfangene Funksignale nach Anspruch 4, **dadurch gekennzeichnet, dass** in jeder Iteration der besagten ersten iterativen Optimierungsprozedur (WESt) die Richtung der besagten Phasenverschiebung (ϕ) und der entsprechende besagte Messwert der Frequenz der Korrekturimpulse (FEC-imp) in einem Speicher gespeichert werden, der eine voreingestellte Anzahl von Werten der besagten Größen enthält, welche wenigstens den letzten 30 Werten entspricht.

12. Kombinationsverfahren für in Raumdiversity-Technik empfangene Funksignale nach Anspruch 11, **dadurch gekennzeichnet, dass** in jeder Iteration der besagten ersten iterativen Optimierungsprozedur (WESt) die Bedingung geprüft wird, ob drei aufeinanderfolgende, eine Verschlechterung bewirkende Phasenverschiebungen mit derselben Richtung vorliegen, das heißt, von denen jede die Wirkung hatte, dass sie den entsprechenden gespeicherten Wert der Frequenz der Korrekturimpulse (FEC-imp) erhöht hat, und dass, wenn die genannte Bedingung erfüllt ist, die Richtung, welche zur Richtung der letzten drei eine Verschlechterung bewirkt habenden Phasenverschiebungen entgegengesetzt ist, als bevorzugte Richtung gewählt wird, wobei die besagte bevorzugte Richtung in einem Speicher der bevorzugten Richtung der Phasenverschiebung gespeichert wird.

13. Kombinationsverfahren für in Raumdiversity-Technik empfangene Funksignale nach Anspruch 12, **dadurch gekennzeichnet, dass** der besagte Speicher der bevorzugten Richtung der Phasenverschiebung bei jedem Umschalten des Betriebs von der besagten zweiten auf die besagte erste (WESt) Optimierungsprozedur zurückgesetzt wird.

14. Kombinationsverfahren für in Raumdiversity-Technik empfangene Funksignale nach Anspruch 13, **dadurch gekennzeichnet, dass** nach Ausführung von 30 aufeinanderfolgenden Phasenverschiebungen seit der letzten Speicherung der besagten bevorzugten Richtung der Phasenverschiebung, und wenn gleichzeitig die Situation vorliegt, dass die Bedingung betreffs des Vorliegens der besagten drei identischen, eine Verschlechterung bewirkenden aufeinanderfolgenden Phasenverschiebungen mit derselben Richtung nicht eingetreten ist, der besagte Speicher der bevorzugten Richtung der Phasenverschiebung gelöscht wird, da sie infolge der sich verändernden Ausbreitungsbedingungen nicht mehr den aktuellen Zustand des besagten Combiners kennzeichnet.

15. Kombinationsverfahren für in Raumdiversity-Technik empfangene Funksignale nach Anspruch 14, **dadurch gekennzeichnet, dass** bei Eintreten eines Synchronisationsverlustes des besagten Demodulators (DEMOD), und wenn gleichzeitig die Situation vorliegt, dass die besagte bevorzugte Richtung der Phasenverschiebung nicht bestimmt werden konnte, diejenige Richtung der Phasenverschiebung gewählt wird, die zur Richtung der letzten Phasenverschiebung, die eine solche Erhöhung des besagten Messwertes der Frequenz der Korrekturimpulse (FEC-imp) bewirkt hat, dass der besagte, einer als kritisch betrachteten Fehlerrate der Daten entsprechende Schwellwert (V_{FEC in}) nicht überschritten wurde, entgegengesetzt ist.

16. Kombinationsverfahren für in Raumdiversity-Technik empfangene Funksignale nach Anspruch 12, **dadurch gekennzeichnet, dass** immer dann, wenn eine bevorzugte Richtung im Speicher vorhanden ist, die erste Phasenverschiebung der besagten zweiten iterativen Optimierungsprozedur einen Absolutwert von 12° hat und die entsprechende Richtung der Phasenverschiebung mit der gespeicherten bevorzugten Richtung übereinstimmt.

17. Kombinationsverfahren für in Raumdiversity-Technik empfangene Funksignale nach Anspruch 14, **dadurch gekennzeichnet, dass** immer dann, wenn keine bevorzugte Richtung gespeichert werden konnte, die erste Phasenverschiebung der besagten zweiten iterativen Optimierungsprozedur einen Absolutwert von 3° hat und die entsprechende Richtung der Phasenverschiebung mit der Richtung übereinstimmt, die zur Richtung der letzten Phasenverschiebung, die eine Überschreitung des besagten, einer als kritisch betrachteten Fehlerrate der Daten entsprechenden Schwellwertes (V_{FEC in}) bewirkt hat, entgegengesetzt ist.

18. Combiner von in Raumdiversity-Technik empfangenen Funksignalen, der einen an einem der zwei von den Empfangssignalen durchlaufenen Zweige angebrachten programmierbaren Phasenschieber (SFAS) umfasst, der außerdem optionale Mittel zur Änderung (ATT-M, ATT-D) der Amplitude der besagten Empfangssignale (Vrxm, Vrxd) umfasst, sowie ein programmierbares Steuergerät (ELAB), das eine erste iterative Prozedur zur Optimierung der Qualität des kombinierten Signals (WESt) ausführt, indem es eine Änderung der Phasenverschiebung (ϕ) steuert, die durch den besagten Phasenschieber (SFAS) vorgenommen wird, und eine Änderung der Amplitude der besagten Signale (Vrxm, Vrxd) steuert, und indem es die Auswirkungen der besagten Änderungen auf das kombinierte Signal (Vcomb) durch Messungen der Leistung (Vagc) und der Amplitudenverzerrung (Vdisp) im Band des modulierten Signals (Vout) auswertet, wobei die besagte erste Prozedur unter den bekannten Prozeduren ausgewählt werden kann, **dadurch gekennzeichnet, dass** er außerdem umfasst:
- Messmittel (FEC-INT) zur Messung der Frequenz der Korrekturimpulse (FEC-imp), die von einem Demodulator (DEMOD, TCM-DEC) ausgesendet werden, der nach dem besagten Combiner angeordnet ist, wobei der Demodulator einen Korrekturimpuls aussendet, wobei jeder Impuls Fehlern entspricht, die in demodulierten Zeichen vor ihrer Korrektur erkannt wurden, wobei das besagte programmierbare Steuergerät (ELAB) am Anfang eines Timeslots von vorgegebener Dauer, der sich an jede an der besagten Phasenverschiebung (ϕ) vorgenommene Änderung anschließt, ein Messungsfreigabe-Signal (Reset) generiert, und wobei die besagten Messmittel (FEC-INT) innerhalb dieses Timeslots die besagte Messung von V_{FEC} durchführen;
- Vergleichsmittel (ELAB) zum Vergleich jedes Messwertes der Frequenz der Korrekturimpulse (FEC-imp) mit einem Schwellwert (V_{FEC in}), der einer Fehlerrate von Daten entspricht, die als kritisch und kaum mit der besagten ersten Optimierungsprozedur (WESt) behebbar betrachtet wird;
- Umschaltmittel (ELAB) zum Umschalten des Betriebs von der besagten ersten (WESt) auf eine zweite iterative Prozedur zur Optimierung der Qualität des kombinierten Signals (Vout) immer dann, wenn der Messwert der Frequenz der Korrekturimpulse (FEC-imp) den besagten kritischen Schwellwert für die Fehlerrate (V_{FEC in}) überschreitet;
- Ausführungsmittel zur Ausführung der besagten zweiten Optimierungsprozedur, welche mit dem besagten programmierbaren Steuergerät (ELAB) übereinstimmen und welche die besagte zweite Prozedur ausführen, indem sie Änderungen an der besagten Phasenverschiebung (ϕ) und möglicherweise an der Amplitude der besagten empfangenen Signale (Vrxm, Vrxd) in Richtung der Verringerung eines Messwertes der Frequenz der Korrekturimpulse (FEC-imp) steuern, bis sich der besagte Messwert bis unter den besagten kritischen Schwellwert (V_{FEC out}) verringert hat; und
- Umschaltmittel (ELAB) zum Umschalten des Betriebs von der besagten zweiten auf die besagte erste Prozedur (WESt), wenn sich der Messwert der Frequenz der Korrekturimpulse (FEC-imp) wieder bis unter den besagten kritischen Schwellwert (V_{FEC out}) verringert hat.

19. Combiner von in Raumdiversity-Technik empfangenen Funksignalen nach Anspruch 18, **dadurch gekennzeichnet, dass** die besagten Messmittel (FEC-INT) zur Messung der Frequenz der Korrekturimpulse (FEC-imp) umfassen:
- eine Messungs-Gatterschaltung, die vom Zeitpunkt des Empfangs des besagten Messungsfreigabe-Signals (Reset) ab von den besagten Korrekturimpulsen (FEC-imp) durchlaufen wird;
- Zählmittel (FEC-INT, ELAB), welche ein Zeitintervall zählen, das gleich der Ausregelzeit der Amplitude des kombinierten Signals (Vcomb) ist, die durch nach jeder Änderung der besagten Phasenverschiebung (ϕ) ablaufende Übergangsvorgänge verursacht wird, wobei die besagten Zählmittel die besagte Messungs-Gatterschaltung sperren, wenn die gezählte Zeit abgelaufen ist.

20. Combiner von in Raumdiversity-Technik empfangenen Funksignalen nach Anspruch 18 oder 19, **dadurch gekennzeichnet, dass** die besagten Vergleichsmittel (ELAB) eine Hysterese (V_{FEC in}, V_{FEC out}) um den besagten kritischen Schwellwert herum für die Fehlerrate der Daten erzeugen.

21. Combiner von in Raumdiversity-Technik empfangenen Funksignalen nach einem der Ansprüche 18 bis 20, **dadurch gekennzeichnet, dass** er Mittel zur Bestimmung einer bevorzugten Richtung der Phasenverschiebung, die im Falle eines Synchronisationsverlustes des Demodulators (DEMOD) zu verwenden ist, umfasst, wobei die besagten Mittel während jeder Iteration der besagten ersten Optimierungsprozedur (WESt) freigegeben werden.

22. Combiner von in Raumdiversity-Technik empfangenen Funksignalen nach Anspruch 21, **dadurch gekennzeichnet, dass** er Mittel zur Bestimmung eines Absolutwertes der Phasenverschiebung, der zum Zeitpunkt des Umschaltens von der besagten ersten auf die besagte zweite Prozedur zur Optimierung der Qualität des kombinierten Signals (Vout) zu verwenden ist, umfasst, wobei die besagten Mittel während jeder Iteration der besagten ersten Optimierungsprozedur (WESt) freigegeben werden.

23. Combiner von in Raumdiversity-Technik empfangenen Funksignalen nach Anspruch 21, **dadurch gekennzeichnet, dass** er Mittel (ELAB) zur Bestimmung des Synchronisationsverlustes des Demodulators (DEMOD) umfasst, welche das Vorliegen von dem Skalenendwert entsprechenden konstanten Werten (V_{FEC max}) bei den besagten Frequenzmessungen der Korrekturimpulse (FEC-imp) prüfen.

24. Combiner von in Raumdiversity-Technik empfangenen Funksignalen nach Anspruch 23, **dadurch gekennzeichnet, dass** er Mittel (ELAB) zur Ermöglichung der Wiederherstellung der Synchronisation des Demodulators (DEMOD) über die Festlegung der besagten bevorzugten Richtung der Phasenverschiebung umfasst.

## Revendications

1. Procédé de combinaison de signaux radioélectriques reçus suivant la technique de la diversité d'espace, qui peut être mis en oeuvre au moyen d'une unité de commande programmable (ELAB), exécutant une première procédure itérative d'optimisation de la qualité du signal combiné (WESt), commandant une variation du déphasage (ϕ) introduite par un déphaseur (SFAS) placé sur l'une des deux branches du combineur (ATT-M, ATT-D, SFAS, SOM, CAG-FI, DISP, ELAB) desdits signaux reçus, et commandant l'amplitude desdits signaux (Vrxm, Vrxd), et évaluant les effets desdites variations sur le signal combiné (Vcomb) au moyen de mesurages de la puissance (Vcag) et de la distorsion des amplitudes (Vdisp) dans la bande du signal modulé (Vout), ladite première procédure étant sélectionnable parmi celles connues, **caractérisé en ce qu'**il comprend aussi les étapes suivantes :
- mesurage de la fréquence des impulsions de correction (FEC-imp) émises par un démodulateur (DEMOD, DEC-MCT) placé en aval dudit combineur, étant entendu que chaque impulsion correspond à des erreurs détectées dans des symboles démodulés avant leur correction, le mesurage étant effectué en continu dans une fenêtre temporelle de durée prédéfinie ouverte par ladite unité de commande programmable (ELAB, Reset) après chaque variation appliquée audit déphasage ;
- comparaison de chaque valeur mesurée de la fréquence des impulsions de correction (FEC-imp) avec une valeur seuil (V_{FEC in}) correspondant à un taux d'erreurs sur les données en ligne considéré comme critique et guère remédiable avec ladite première procédure d'optimisation (WESt) ;
- basculement du fonctionnement de ladite première stratégie (WESt) vers une seconde procédure itérative d'optimisation de la qualité du signal combiné (Vout), chaque fois que ladite valeur mesurée de la fréquence des impulsions de correction (FEC-imp) dépasse ledit seuil critique du taux d'erreurs (V_{FEC in}), la seconde procédure introduisant des variations dudit déphasage (ϕ) et éventuellement, de l'amplitude desdits signaux reçus (Vrxm, Vrxd), dans le sens d'une diminution d'une valeur mesurée de la fréquence des impulsions de correction (FEC-imp), jusqu'à amener cette même valeur mesurée sous ledit seuil critique (V_{FEC out}), et
- basculement du fonctionnement de ladite seconde procédure vers ladite première (WESt) lorsque la valeur mesurée de la fréquence des impulsions de correction (FEC-imp) revient sous ledit seuil critique (V_{FEC out}).

2. Procédé de combinaison de signaux radioélectriques reçus suivant la technique de la diversité d'espace, selon la revendication 1, **caractérisé en ce que** ladite fenêtre de mesurage de durée prédéfinie a une durée égale au temps d'établissement de l'amplitude du signal combiné (Vcomb) causé par les transitoires survenant après chaque variation du déphasage (ϕ), ce qui permet d'exécuter ledit mesurage de la fréquence des impulsions de correction (FEC-imp) sans ralentir l'exécution de ladite procédure d'optimisation.

3. Procédé de combinaison de signaux radioélectriques reçus suivant la technique de la diversité d'espace, selon la revendication 1 ou 2, **caractérisé en ce que** ledit seuil critique du taux d'erreurs est soumis à une hystérésis (V_{FEC in}, V_{FEC out}).

4. Procédé de combinaison de signaux radioélectriques reçus suivant la technique de la diversité d'espace, selon l'une quelconque des revendications précédentes, **caractérisé en ce que** chaque itération de ladite première procédure itérative d'optimisation (WESt) contribue à la détermination d'un sens préférentiel de déphasage à utiliser en cas de perte de la synchronisation du démodulateur, cette situation étant mise en évidence par des valeurs maximales constantes (V_{FEC max}) desdits mesurages de la fréquence des impulsions de correction (FEC-imp).

5. Procédé de combinaison de signaux radioélectriques reçus suivant la technique de la diversité d'espace, selon la revendication 4, **caractérisé en ce que** chaque itération de ladite première procédure itérative d'optimisation (WESt) contribue à la détermination d'une valeur absolue de déphasage à utiliser au moment du basculement de ladite première procédure d'optimisation de la qualité du signal combiné (Vout) vers la seconde.

6. Procédé de combinaison de signaux radioélectriques reçus suivant la technique de la diversité d'espace, selon la revendication 5, **caractérisé en ce que**, après une variation dudit déphasage (ϕ) et, éventuellement, après une variation de l'amplitude desdits signaux reçus (Vrxm, Vrxd), un premier test est effectué pour vérifier si ladite valeur mesurée de la fréquence des impulsions de correction (FEC-imp) s'avère augmentée et **en ce que**, en cas de réponse affirmative audit premier test, un second test est effectué pour vérifier si le démodulateur (DEMOD) a perdu sa synchronisation, tandis qu'en cas de réponse négative audit premier test, l'exécution de ladite première procédure itérative d'optimisation (WESt) se poursuit.

7. Procédé de combinaison de signaux radioélectriques reçus suivant la technique de la diversité d'espace, selon la revendication 6, **caractérisé en ce que**, lorsque ledit second test révèle une perte de la synchronisation du démodulateur (DEMOD), ledit sens préférentiel de déphasage est défini et un premier cycle de récupération ayant un premier nombre maximal prédéfini d'itérations de la variation dudit déphasage (ϕ) et, éventuellement, de l'amplitude desdits signaux reçus (Vrxm, Vrxd), est effectué pour essayer d'abaisser ladite valeur mesurée de la fréquence des impulsions de correction (FEC-imp) sous ladite valeur maximale.

8. Procédé de combinaison de signaux radioélectriques reçus suivant la technique de la diversité d'espace, selon la revendication 7, **caractérisé en ce que**, lors du dépassement dudit premier nombre maximal prédéfini d'itérations, le sens du déphasage (ϕ) est inversé et un second cycle de récupération, identique audit premier cycle et ayant un second nombre maximal prédéfini d'itérations, est exécuté pour essayer d'abaisser ladite valeur mesurée de la fréquence des impulsions de correction (FEC-imp) sous ladite valeur maximale.

9. Procédé de combinaison de signaux radioélectriques reçus suivant la technique de la diversité d'espace, selon la revendication 8, **caractérisé en ce que**, lors du dépassement dudit second nombre maximal prédéfini d'itérations, un nombre maximal prédéfini de déphasages est effectué selon ladite première procédure d'optimisation et, si la synchronisation du démodulateur n'a toujours pas été récupérée, le même nombre prédéfini de déphasages est effectué selon une troisième procédure d'optimisation choisie parmi les procédures connues, différentes de ladite première procédure.

10. Procédé de combinaison de signaux radioélectriques reçus suivant la technique de la diversité d'espace, selon l'une quelconque des revendications précédentes, **caractérisé en ce que** le sens dudit déphasage est soumis à une inversion au moment du basculement de ladite première procédure itérative d'optimisation de la qualité du signal combiné (Vout) vers la seconde.

11. Procédé de combinaison de signaux radioélectriques reçus suivant la technique de la diversité d'espace, selon la revendication 4, **caractérisé en ce que**, à chaque itération de ladite première procédure itérative d'optimisation (WESt), le sens de chaque déphasage (ϕ) et ladite valeur mesurée correspondante de la fréquence des impulsions de correction (FEC-imp) sont enregistrés dans une mémoire comprenant un nombre prédéfini de valeurs desdits paramètres correspondant au moins aux 30 dernières valeurs.

12. Procédé de combinaison de signaux radioélectriques reçus suivant la technique de la diversité d'espace, selon la revendication 11, **caractérisé en ce que**, à chaque itération de ladite première procédure itérative d'optimisation (WESt), on vérifie la condition consistant en trois déphasages détériorants consécutifs de même sens, c'est-à-dire ayant eu chacun pour effet d'augmenter la valeur correspondante enregistrée de la fréquence des impulsions de correction (FEC-imp) et **en ce que**, à l'apparition de la condition précitée, le sens opposé à celui des trois derniers déphasages détériorants est choisi comme sens préférentiel, ledit sens préférentiel étant enregistré dans une mémoire du sens préférentiel de déphasage.

13. Procédé de combinaison de signaux radioélectriques reçus suivant la technique de la diversité d'espace, selon la revendication 12, **caractérisé en ce que** ladite mémoire du sens préférentiel de déphasage est remise à zéro à chaque basculement du fonctionnement de ladite seconde procédure d'optimisation vers ladite première (WESt).

14. Procédé de combinaison de signaux radioélectriques reçus suivant la technique de la diversité d'espace, selon la revendication 13, **caractérisé en ce que**, à l'issue de 30 déphasages consécutifs à compter du dernier enregistrement dudit sens préférentiel de déphasage, conjointement au fait que la condition consistant en l'apparition desdits trois sens identiques consécutifs de déphasage détériorant ne se soit pas réalisée, ladite mémoire du sens préférentiel de déphasage est effacée, puisqu'elle n'indique plus l'état actuel dudit combineur suite à la modification des conditions de propagation.

15. Procédé de combinaison de signaux radioélectriques reçus suivant la technique de la diversité d'espace, selon la revendication 14, **caractérisé en ce que**, à l'apparition d'une perte de la synchronisation dudit démodulateur (DEMOD), conjointement au fait que ledit sens préférentiel de déphasage n'a pas pu être déterminé, on sélectionne le sens de déphasage opposé à celui du dernier déphasage qui a causé une augmentation de ladite valeur mesurée de la fréquence des impulsions de correction (FEC-imp) de telle sorte à ne pas dépasser ledit seuil (V_{FEC in}) correspondant à un taux d'erreurs sur les données considéré comme critique.

16. Procédé de combinaison de signaux radioélectriques reçus suivant la technique de la diversité d'espace, selon la revendication 12, **caractérisé en ce que**, chaque fois qu'il y a un sens préférentiel en mémoire, le premier déphasage de ladite seconde procédure itérative d'optimisation a une valeur absolue égale à 12 ° et le sens de déphasage correspondant coïncide avec le sens préférentiel enregistré.

17. Procédé de combinaison de signaux radioélectriques reçus suivant la technique de la diversité d'espace, selon la revendication 14, **caractérisé en ce que**, chaque fois qu'un sens préférentiel n'a pas pu être enregistré dans la mémoire, le premier déphasage de ladite seconde procédure itérative d'optimisation a une valeur absolue égale à 3 ° et le sens de déphasage correspondant coïncide avec le sens opposé à celui du dernier déphasage qui a causé le dépassement dudit seuil (V_{FEC in}) correspondant à un taux d'erreurs sur les données considéré comme critique.

18. Combineur de signaux radioélectriques reçus suivant la technique de la diversité d'espace, comprenant un déphaseur programmable (SFAS) placé sur l'une des deux branches traversées par les signaux de réception, comprenant aussi des moyens facultatifs (ATT-M, ATT-D) pour faire varier l'amplitude desdits signaux de réception (Vrxm, Vrxd), et une unité de commande programmable (ELAB) exécutant une première procédure itérative d'optimisation de la qualité du signal combiné (WESt), commandant une variation du déphasage (ϕ), introduite par ledit déphaseur (SFAS), et de l'amplitude desdits signaux (Vrxm, Vrxd), et évaluant les effets desdites variations sur le signal combiné (Vcomb) par des mesurages de la puissance (Vcag) et de la distorsion des amplitudes (Vdisp) dans la bande du signal modulé (Vout), ladite première procédure pouvant être choisie parmi celles connues, **caractérisé en ce qu'**il comprend aussi :
- un moyen de mesurage (FEC-INT) de la fréquence des impulsions de correction (FEC-imp) émises par un démodulateur (DEMOD, DEC-MCT) placé en aval dudit combineur, le démodulateur émettant une impulsion de correction, étant entendu que chaque impulsion correspond aux erreurs détectées dans les symboles démodulés avant leur correction, ladite unité de commande programmable (ELAB) produisant un signal d'activation du mesurage (Reset) au début d'une tranche de temps de durée prédéfinie, postérieure à chaque variation appliquée audit déphasage (ϕ), et ledit moyen de mesurage (FEC-INT) exécutant ledit mesurage de V_{FEC} dans cette tranche de temps ;
- un moyen de comparaison (ELAB) de chaque valeur mesurée de la fréquence des impulsions de correction (FEC-imp) avec une valeur seuil (V_{FEC in}) correspondant à un taux d'erreurs sur les données considéré comme critique et guère remédiable avec ladite première procédure d'optimisation (WESt) ;
- un moyen de basculement (ELAB) pour basculer le fonctionnement de ladite première procédure itérative (WESt) d'optimisation de la qualité du signal combiné (Vout) vers une seconde, chaque fois que la valeur mesurée de la fréquence des impulsions de correction (FEC-imp) dépasse ledit seuil critique du taux d'erreurs (V_{FEC in});
- un moyen d'exécution de ladite seconde procédure d'optimisation, coïncidant avec ladite unité de commande programmable (ELAB), exécutant ladite seconde procédure en commandant des variations du déphasage (ϕ) et éventuellement, de l'amplitude desdits signaux reçus (Vrxm, Vrxd), dans le sens de la diminution d'une valeur mesurée de la fréquence des impulsions de correction (FEC-imp), jusqu'à amener cette même valeur mesurée sous ledit seuil critique (V_{FEC out}), et
- un moyen de basculement (ELAB) du fonctionnement de ladite seconde procédure vers ladite première (WESt) lorsque la valeur mesurée de la fréquence des impulsions de correction (FEC-imp) revient sous ledit seuil critique (V_{FEC out}).

19. Combineur de signaux radioélectriques reçus suivant la technique de la diversité d'espace, selon la revendication 18, **caractérisé en ce que** ledit moyen de mesurage (FEC-INT) de la fréquence des impulsions de correction (FEC-imp) comprend :
- une porte logique de mesurage traversée par lesdites impulsions de correction (FEC-imp) démarrant à la réception dudit signal d'activation du mesurage (Reset) ;
- des moyens de comptage (FEC-INT, ELAB) comptant un intervalle de temps égal au temps d'établissement de l'amplitude du signal combiné (Vcomb) causé par les transitoires qui se produisent après chaque variation dudit déphasage (ϕ), lesdits moyens de comptage désactivant ladite porte logique de mesurage lorsque le temps à compter s'est écoulé.

20. Combineur de signaux radioélectriques reçus suivant la technique de la diversité d'espace, selon la revendication 18 ou 19, **caractérisé en ce que** ledit moyen de comparaison (ELAB) produit une hystérésis (V_{FEC in}, V_{FEC out}) autour dudit seuil critique du taux d'erreurs sur les données.

21. Combineur de signaux radioélectriques reçus suivant la technique de la diversité d'espace, selon l'une quelconque des revendications 18 à 20, **caractérisé en ce qu'**il comprend des moyens pour déterminer un sens préférentiel de déphasage à utiliser en cas de perte de la synchronisation du démodulateur (DEMOD), lesdits moyens étant activés durant chaque itération de ladite première procédure d'optimisation (WESt).

22. Combineur de signaux radioélectriques reçus suivant la technique de la diversité d'espace, selon la revendication 21, caractérisé en qu'il comprend des moyens pour déterminer une valeur absolue de déphasage à utiliser au moment du basculement de ladite première procédure d'optimisation de la qualité du signal combiné (Vout) vers ladite seconde, lesdits moyens étant activés durant chaque itération de ladite première procédure d'optimisation (WESt).

23. Combineur de signaux radioélectriques reçus suivant la technique de la diversité d'espace, selon la revendication 21, **caractérisé en ce qu'**il comprend un moyen (ELAB) pour déterminer la perte de synchronisation du démodulateur (DEMOD) en vérifiant la présence de valeurs constantes maximales (V_{FEC max}) desdites mesures de la fréquence des impulsions de correction (FEC-imp).

24. Combineur de signaux radioélectriques reçus suivant la technique de la diversité d'espace, selon la revendication 23, **caractérisé en ce qu'**il comprend un moyen (ELAB) pour faciliter la récupération de la synchronisation du démodulateur (DEMOD) en définissant ledit sens préférentiel de déphasage.
